(19)

Europäisches
Patentamt

European
Patent Office

Office européen
des brevets

(11) **EP 4 360 863 B1**

(12) **EUROPEAN PATENT SPECIFICATION**

(45) Date of publication and mention
of the grant of the patent:
**14.01.2026 Bulletin 2026/03**

(21) Application number: **23206318.0**

(22) Date of filing: **27.10.2023**

(51) International Patent Classification (IPC):
***B29D 30/30*** (2006.01)      ***B29D 30/58*** (2006.01)
***G01B 11/25*** (2006.01)

(52) Cooperative Patent Classification (CPC):
**B29D 30/58; B29D 30/08; B29D 30/3007;**
**B29D 30/44; G01B 11/2504; G01B 11/2522;**
B29D 2030/082; B29D 2030/3064;
B29D 2030/3085; B29D 2030/4418

(54) **TIRE BUILDING APPARATUS AND METHOD**

REIFENAUFBAUVORRICHTUNG UND VERFAHREN

APPAREIL ET PROCÉDÉ DE FABRICATION DE PNEUS

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **31.10.2022 US 202263381628 P**
**05.10.2023 US 202318481592**

(43) Date of publication of application:
**01.05.2024 Bulletin 2024/18**

(73) Proprietor: **The Goodyear Tire & Rubber**
**Company**
**Akron, OH 44316 (US)**

(72) Inventors:
• **MURRAY, Thomas Alan**
**Copley, 44321 (US)**
• **CABRERA, Luis Antonio**
**Uniontown, 44685 (US)**
• **BAIR, David Lee**
**Hudson, 44236 (US)**
• **MORA AZOCAR, Cristian Andre**
**Uniontown, 44685 (US)**
• **ZHOU, Qina**
**Solon, 44139 (US)**

(74) Representative: **Kutsch, Bernd**
**Goodyear S.A.**
**Patent Department**
**Avenue Gordon Smith**
**7750 Colmar-Berg (LU)**

(56) References cited:
EP-A1- 2 965 895      EP-A1- 3 141 382
EP-A1- 3 495 130      WO-A1-2015/069102
WO-A2-2005/009726      CN-A- 106 483 136
CN-A- 106 645 198      DE-A1- 102006 017 882
DE-A1- 102020 201 174      JP-A- 2010 260 178
US-A- 5 206 720

## Description

BACKGROUND

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped un-vulcanized tire carcass, which is known in the art at that stage as a green tire, is then inserted into a mold or press for forming of the tread pattern and curing or vulcanization.

CN 106 645 198 A describes an apparatus in accordance with the preamble of claim 1.

An apparatus for applying a tire component layer onto a tire building drum and monitoring its position is known from JP 2010-260178 A, DE 10 2006 017 882 A1 and US 5,206,720.

EP 3 141 382 A1 describes a cylindrical-member molding method and device. Belt-like members are accurately formed in a cylindrical shape.

SUMMARY OF THE INVENTION

The invention relates to an apparatus in accordance with claim 1 and to a method in accordance with claim 10.

Dependent claims refer to preferred embodiments of the invention.

In one embodiment, an apparatus is provided that includes a tire building drum and a machine vision system directed at the tire building drum, the machine vision system producing a three dimensional image of a green rubber tread applied to the tire building drum. The apparatus further comprises at least one processor circuit with a memory comprising instructions, that when executed by the processor circuit, causes the at least one processor circuit to at least identify a center of the green rubber tread in the three dimensional image by performing at least one convolution with at least one profile trace of the green rubber tread and a predefined tread profile, identify a difference between the center of the green rubber tread and a target position of the tire building drum, and use the difference as a tread position feedback error to position an application of a next green rubber tread onto the tire building drum from a tread conveyor.

In a further embodiment, a method is provided that comprises the steps of directing a machine vision system to a tire building drum in a tire building machine, the machine vision system producing a three dimensional image of a green rubber tread applied to the tire building drum. A center of the green rubber tread is identified in the three dimensional image by performing at least one convolution with at least one profile trace of the green rubber tread and a predefined tread profile. A difference between the center of the green rubber tread and a center of the tire building drum is identified. Then, the difference is used as a tread position feedback error to position an application of a next green rubber tread onto the tire building drum from a tread conveyor.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims. In addition, all optional and preferred features and modifications of the described embodiments are usable in all aspects of the disclosure taught herein. Furthermore, the individual features of the dependent claims, as well as all optional and preferred features and modifications of the described embodiments are combinable and interchangeable with one another.

BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.

FIG. 1 is a drawing of a tire building machine according to various embodiments of the present disclosure.

FIG. 2 is a drawing of a tire building drum employed in the tire building machine of FIG. 1 according to various embodiments of the present disclosure.

FIG. 3 depicts an example of a three dimensional image generated by a machine vision system employed with the tire building machine of FIG. 1 according to various embodiments of the present disclosure.

FIGS. 4A and 4B are flow charts that depict portions of an imaging controller executed to determine a position of a center of the tire building drum of FIG. 2 according to various embodiments of the present disclosure.

FIG. 5 is a flow chart that depicts a further portion of the operation of the imaging controller of the tire building machine of FIG. 1 according to various embodiments of the present disclosure.

FIG. 6 depicts an example of another three dimensional image generated by a machine vision system employed with the tire building machine of FIG. 1 according to various embodiments of the present disclosure.

FIG. 7 is a flow chart that depicts an additional portion of the operation of the imaging controller of the tire building machine of FIG. 1 according to various embodiments of the present disclosure.

FIG. 8 depicts an image of a laser falling incident upon a green rubber tread along with a corresponding profile trace taken across the green rubber tread according to various embodiments of the present disclosure.

FIG. 9 depicts a profile trace taken across a green rubber tread depicted in the three dimensional image of FIG. 6 according to various embodiments of the present disclosure.

FIG. 10 is a flow chart that depicts an additional portion of the operation of the imaging controller in determining a tread center of a green rubber tread used in the building of a tire by the tire building machine of FIG. 1 according to various embodiments of the present disclosure.

FIG. 11 depicts an image illustrating a convolution method to identify a tread center of a green rubber tread depicted in the three dimensional image of FIG. 6 according to various embodiments of the present disclosure.

FIG. 12 is a flow chart that depicts an additional portion of the operation of the imaging controller in determining a tread center of a green rubber tread used in the building of a tire by the tire building machine of FIG. 1 according to various embodiments of the present disclosure.

FIG. 13 is a block diagram depicting a feedback loop that is employed in the tire building machine of FIG. 1 according to various embodiments of the present disclosure.

FIG. 14 is a drawing of a tire building drum employed in the tire building machine of FIG. 1 according to various embodiments of the present disclosure.

FIG. 15 depicts a three dimensional image illustrating a portion of a tire building drum of FIG. 14 according to various embodiments of the present disclosure.

FIG. 16 is a flow chart that depicts an additional portion of the operation of the imaging controller in calibrating the machine vision system that is part of the tire building machine of FIG. 1 according to various embodiments of the present disclosure.

FIG. 17 is a flow chart that depicts an additional portion of the operation of the imaging controller in verifying a position of a tire building drum during a build of a tire with the tire building machine of FIG. 1 according to various embodiments of the present disclosure.

FIG. 18 is a schematic diagram that depicts an example of an imaging controller used in the tire building machine of FIG. 1 according to various embodiments of the present disclosure.

## DETAILED DESCRIPTION OF PREFERRED EMBODIMENTS OF THE INVENTION

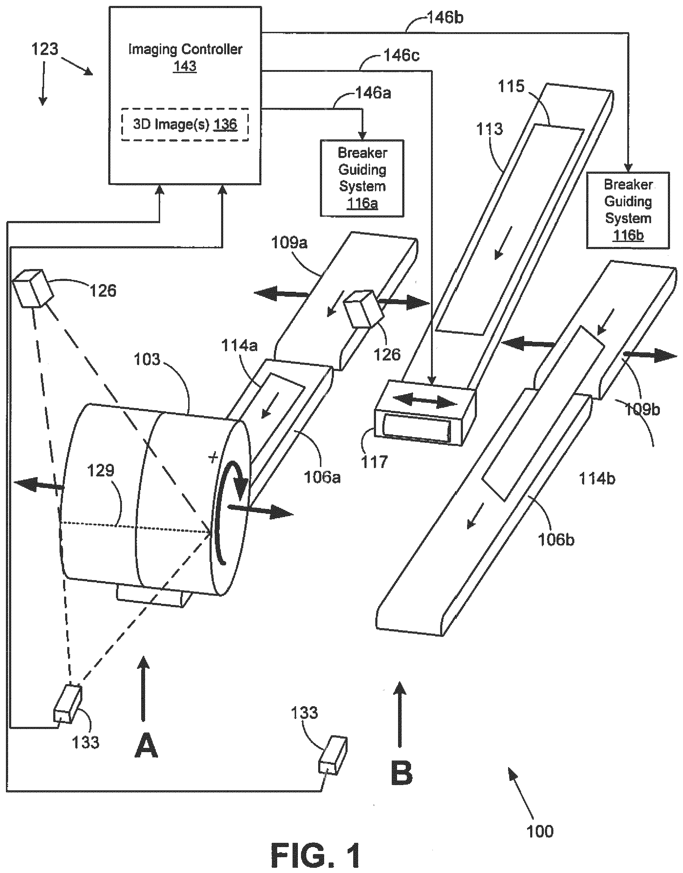

With reference to FIG. 1, shown are various components of a tire building machine 100 according to various embodiments of the present disclosure. In the following discussion, first the components of the tire building machine 100 are discussed followed by a discussion of the operation of the same.

To begin, the tire building machine 100 includes a tire building drum 103 that rotates and moves axially in two directions. The tire building machine 100 also includes a first application conveyor 106a and a second application conveyor 106b. A first feed conveyor 109a is positioned adjacent to the first application conveyor 106a, and a second feed conveyor 109b is positioned adjacent to the second application conveyor 106b.

The tire building machine 100 further includes a tread application conveyor 113 that is positioned above the second application conveyor 106b and second feed conveyor 109b.

The tire building drum 103 is moved axially between various positions during the process of building a tire (not shown). During the build process, the tire building drum 103 may be moved to position A to engage with the first application conveyor 106a as will be described. Thereafter, the tire building drum 103 is typically moved to position B to engage with the second application conveyor 106b and the tread application conveyor 113 as will be described.

The first application conveyor 106a and the first feed conveyor 109a convey a first breaker 114a to the tire building drum 103 when the tire building drum 103 is in position A as will be described. The second application conveyor 106b and the second feed conveyor 109b convey a second breaker 114b to the tire building drum 103 when the tire building drum 103 is in position B as will be described. The feed conveyors 109 a/b are placed end to end relative to the application conveyors 106a/b such that a breaker 114a/b that is conveyed by a respective feed conveyor 109a/b is transferred to a respective application conveyor 106a/b. Also, the tread application conveyor 113 conveys a green rubber tread 115 to the tire building drum 103 when the tire building drum 103 is in position B as will be described.

Lateral movement and positioning of each of the first and second feed conveyors 109a and 109b can be adjusted by various actuators and positioning infrastructure such as can be appreciated. A first breaker guiding system 116a is associated with the first feed conveyor 109a and controls the lateral movement and positioning of the first feed conveyor 109a. Also, a second breaker guiding system 116b is associated with the second feed conveyor 109b and controls the lateral movement and positioning of the second feed conveyor 109b. A tread application shifter 117 is configured to shift the green rubber tread 115 laterally as the green rubber tread 115 is applied to the tire building drum 103 when the tire building drum 103 is in position B.

The tire building machine 100 further includes a machine vision system 123 according to various embodiments. The machine vision system 123 may employ three dimensional (3D) triangulation or other type of machine vision technology to generate an image of the tire building drum 103 in each of positions A and B where the tire building drum 103 is positioned during the tire build process as will be described.

A machine vision system 123 includes lasers 126 that illuminate a laser trace 129 in an axial direction on the surface of the tire building drum 103. The machine vision system 123 also includes 3D cameras 133 that generate a 3D image 136 of the tire building drum 103 as breakers 114a/b or a green rubber tread 115 are applied to the tire building drum 103. The position or direction of the lasers 126 and the 3D cameras 133 may be configured to change depending on the size of a given tire under construction. In this respect, the structure upon with the lasers 126 and 3D cameras 133 are mounted provides for the rotation or other movement of the lasers 126 or 3D cameras 133 in order to properly direct the lasers 126 to the tire building drum 103 or to position the 3D cameras 133 so that the tire building drum 103 is properly positioned in the field of view of the camera 133. By virtue of the positioning of the lasers 126 and the 3D cameras 133, the machine vision system 123 is directed to the tire building drum 103.

The 3D cameras 133 are controlled by an imaging controller 143. To this end, the imaging controller 143 causes one of the respective 3D cameras 133 to acquire a 3D image 136 of the tire building drum 103 as the tire building drum 103 rotates and a breaker 114a/b or a green rubber tread 115 is applied thereto. Any 3D image 136 generated by a respective 3D camera 133 is stored in a memory associated with the imaging controller 143 to be processed for purposes of quality control and potentially other purposes.

The imaging controller 143 generates feedback signals 146a, 146b, or 146c that are used to adjust the operational set point for each one of the breaker guiding systems 116a/b and the tread application shifter 117 as shown.

Next a description of the operation of the tire building machine 100 is described. When building a tire, the tire building drum 103 is moved to position A just above an end roller of the first application conveyor 106a. Initially, the first breaker 114a, second breaker 114b, and the green rubber tread 115 are all stored as a single continuous strip on a spool that unravels as the breaker 114 a/b or green rubber tread 115 progress onto the feed conveyors 109 a/b or the tread application conveyor 113 as is appropriate. At some point in the process the single continuous strip of the breaker 114a/b or the green rubber tread 115 on a spool is cut into tire-sized segments that move along the feed conveyors 109a/b or the tread application conveyor 113.

The breakers 114a/b move along the first and second feed conveyors 109a/b, the breaker guiding systems 116a/b adjust the lateral position of the first and second feed conveyors 109a/b, respectively, so that when the breakers 114a/b transfer to their respective application conveyors 106a/b, they are properly positioned on the respective application conveyors 106a/b to be applied to the tire building drum 103. In applying the breakers 114a/b to the tire building drum 103, the breakers 114a/b are pinched between the tire building drum 103 and an application roller of the respective application conveyor 106a/b, thereby causing the breaker 114a/b to stick to the tire building drum 103 as it rotates about its axis. In one embodiment, the distance between the tire building drum 103 and the final roller of the first and second application conveyors 106a/b is approximately equal to the thickness of a given breaker 114a/b.

Note that the first breaker 114a progresses along the first application conveyor 106a and is applied to the tire building drum 103 when the tire building drum 103 is in position A. The second breaker 114b or the green rubber tread 115 progress along the second application conveyor 106b or the tread application conveyor 113 to be applied to the tire building drum 103 when the tire building drum 103 is position B.

When a green rubber tread 115 reaches the end of the tread application conveyor 113, the tread application shifter 117 positions the application of the green rubber tread 115 onto the tire building drum 103 from the tread application conveyor 113. In this manner, a green rubber tread 115 is positioned on the tire building drum 103 as it is transferred from the tread application conveyor 113 to the tire building drum 103.

When the tire building drum 103 is in position A or position B to receive a first breaker 114a, a second breaker 114b, or the green rubber tread 115, the tire building drum 103 begins to rotate such that the respective breaker 114a/b or green rubber tread 115 is applied thereto. At such time, the image controller 143 causes a respective laser 126 to illuminate the laser trace 129 across the tire building drum 103. Also, the image controller 143 further causes the respective 3D camera 133 to generate the laser traces 129 from which the 3D image 136 of the tire building drum 103 is generated. The 3D image 136 is stored in a memory associated with the image controller 143.

The imaging controller 143 then accesses the 3D image 136 to perform specific analysis. In the case where the 3D image 136 depicts a breaker 114a/b as it has been applied to the tire building drum 103, the imaging controller 143 identifies a center of the breaker in the 3D image 136. Also, the imaging controller 143 identifies a target position on the tire building drum 103 that is where the breaker 114a/b is to be centered. In one embodiment, such a target position is the center of the tire building drum 103. Although the center may be referenced herein, it is understood that the target position may be at some location on the tire building drum 103 other than the center, where the center of the tire building drum 103 is cited herein as an example.

Next, a difference between the center of the breaker 114a/b and the center of the tire building drum 103 is discussed. Ideally, the center of the breaker 114a/b should be aligned with the center of the tire building drum 103. However, in reality such alignment is difficult to achieve where a difference is often experienced between the respective centers. According to various embodiments, this difference expressed in terms of units of length such as millimeters is applied to corresponding breaker guiding system 116a/b as a breaker position feedback error to determine a position of a subsequent breaker 114a/b that is transferred from the respective feed conveyor 109a/b to the respective application conveyor 106a/b. Specifically, in one embodiment, in applying the difference to the breaker guiding system 116a/b, a control setpoint of the breaker guiding system 116a/b is adjusted by the difference to control the lateral position of a subsequent breaker as applied to the tire building drum.

In response thereto, the breaker guiding system 116a/b will adjust the lateral position of the respective feed conveyor 109a/b so that the next breaker 114a/b is positioned on the respective application conveyor 106a/b such that the difference between the center of the breaker 114a/b and the center of the tire building drum 103 is minimized. In this manner, any difference between a center of given breaker 114a/b applied to the tire building drum 103 and a center of the tire building drum 103 is minimized over time and closer alignment between the center of the breaker 114a/b and the center of the tire building drum 103 is achieved.

After the breakers 114a/b have been applied and the tire building drum 103 is in position B, the green rubber tread 115 is applied to the tire building drum 103. As described above, 3D image 136 is generated of the tire building drum 103 as the green rubber tread 115 is applied to the tire building drum 103. The imaging controller 143 analyzes the 3D image 136 and identifies a center of the green rubber tread 115 in the 3D image 136. Various approaches for identifying the center of the green rubber tread 115 are further described with reference to later figures. A difference is identified between the center of the green rubber tread 115 and the center (or other target position) of the tire building drum 103. This difference is expressed in term of millimeters or other appropriate unites and it applied as a tread position feedback error to the tread application shifter 117 to guide the lateral position of a subsequent green rubber tread 115 as it is applied to the tire building drum 103. In one embodiment, in applying the difference as a tread position feedback error to the tread application shifter 117, a control setpoint of the tread application shifter 117 is adjusted to control a lateral position of a subsequent green rubber tread 115 as applied to the tire building drum 103 based on the difference. That is to say, adjusting the control setpoint causes a corresponding shift of the lateral position of a subsequent green rubber tread 115 as it is applied to the tire building drum 103.

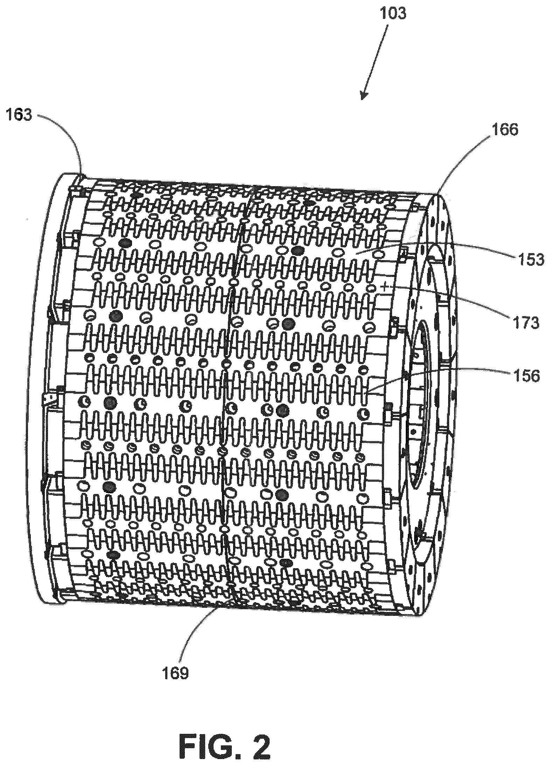

Referring FIG. 2, shown is an example of a tire building drum 103 according to various embodiments. The tire building drum 103 includes several drum segments 153 with interleaving fingers 156. The interleaving fingers 156 comprise a feature of the tire building drum 103 that may be used to locate target positions such as the center of the tire building drum 103. In addition, other such features may comprise bolt holes, edge lines of components, and other features. Also, a marker 173 may also be engraved or otherwise disposed on a surface of the tire building drum 103. A target position such as the center of the tire building drum 103 may be determined relative to a given feature or marker of the tire building drum 103. In addition, the tire building drum 103 includes a centerline 169 that may be engraved or otherwise disposed on the surface of the drum segments 153. In one embodiment, the marker 173 is positioned on the tire building drum 103 at a location toward a side edge 163 or 166 of the tire building drum 103 where it will not be covered by a breaker 114a/b or green rubber tread 115.

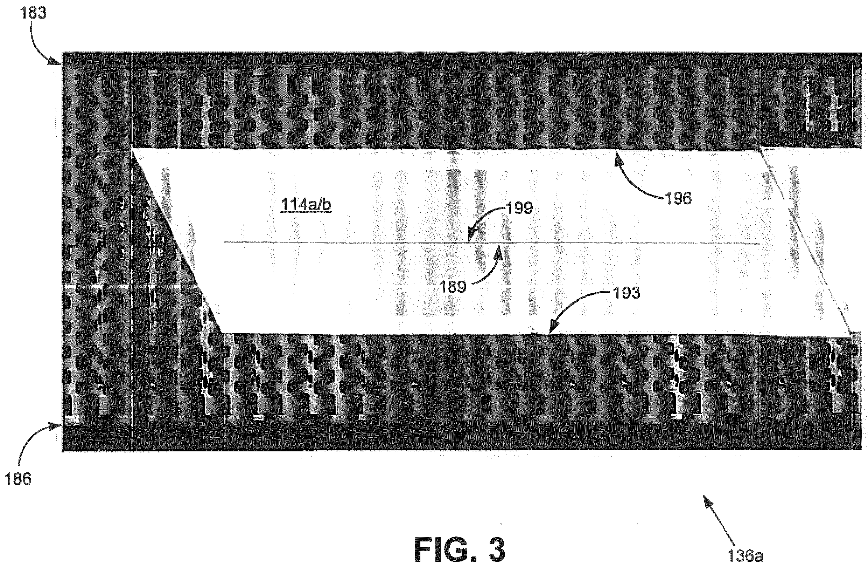

With reference to FIG. 3, shown is an example of a 3D image 136, denoted herein as 3D image 136a, according to one embodiment of the present disclosure. As shown, the 3D image 136a depicts a first edge 183 and a second edge 186 of the tire building drum 103 (FIG. 1). The imaging controller 143 (FIG. 1) is configured to detect the first edge 183 and the second edge 186 in the 3D image 136a. A given target position on the tire building drum 103 may be determined relative to the first edge 183 and the second edge 186. For example, the center 189 of the tire building drum 103 can be determined as the midpoint between the first and second edges 183 and 186 in the 3D image 136a.

The imaging controller 143 is further configured to detect a first edge 193 and a second edge 196 of the breaker 114a/b in the 3D image 136a. The center 199 of the breaker 114a/b can be determined as the midpoint between the first and second edges 183 and 186 of the breaker 114a/b.

In addition, the imaging controller 143 is further configured to verify a radius of the tire building drum 103. To do so, an uncovered one of the segments 153 (FIG. 2) of the tire building drum 103 that is uncovered by a breaker 114a/b (FIG. 3) or a green rubber tread 115 (FIG. 1) is identified in the 3D image 136a and the radius of the segment 153 is determined along an axis across the uncovered segment 153 of the tire building drum 103. Given that there will be many radius readings that might vary along the axis measured, in one embodiment the values for the radius along the axis measured are averaged to provide an average radius to be used to verify that the radius of the tire building drum 103 is within a predefined tolerance of a radius specified in a given tire recipe.

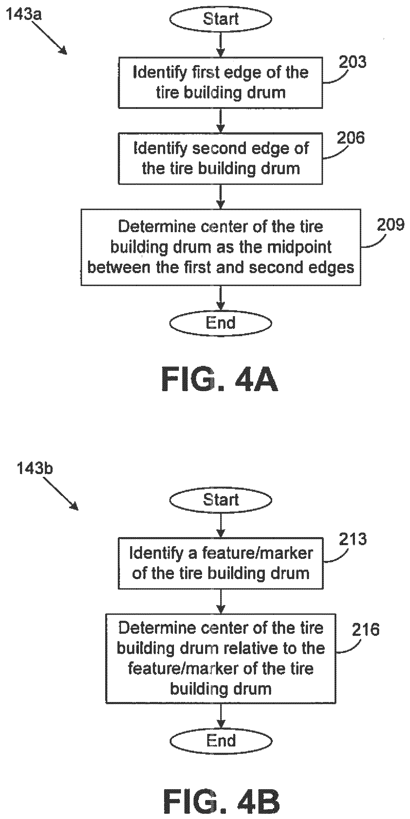

With reference next to FIGS. 4A and 4B, shown are flowcharts that provide examples of the operation of functionality of the image controller 143, denoted herein as image controller 143a and 143b, according to various embodiments. It is understood that the flowcharts of FIGS. 4A and 4B provide merely examples of the many different types of functional arrangements that may be employed to implement the operations depicted therein. As an alternative, the flowcharts of FIGS. 4A and 4B may be viewed as depicting an example of elements of a method implemented in the image controller 143 according to various embodiments.

As depicted in FIGS. 4A and 4B, there are various approaches for determining the center 189 (FIG. 3) of the tire building drum 103 (FIG.3) according to various embodiments. With reference to FIG. 4A, in box 203 a first edge 183 (FIG. 3) of the tire building drum 103 is identified in the 3D image 136a (FIG. 3). Thereafter, in box 206, a second edge 186 (FIG. 3) of the tire building drum 103 is identified in the 3D image 136a. In box 209, the location of the center 189 of the tire building drum 103 is calculated as the midpoint between the first and second edges 183 and 186. Thereafter, the function ends as shown.

Referring to FIG. 4B, in box 213 a feature of the tire building drum 103 such as a finger 156 (FIG. 2), centerline 169 (FIG. 2), bolt hole, or other feature is identified in the 3D image 136a. Alternatively, a marker 173 (FIG. 2) of predefined design is identified on a segment 153 (FIG. 2) of the tire building drum 103, where the marker 173 is located at a predefined distance from the center 189 of the tire building drum 103. As an additional alternative, a feature of a structure may be located in the 3D image 136 (FIG. 1), where the tire building drum 103 is attached to the structure. The location of the center 189 of the tire building drum 103 may be determined relative to the position of the feature on the structure. Then, in box 216 the center 189 of the tire building drum 103 is determined relative to the feature or marker 173 identified on the tire building drum 103. Specifically, the center 189 of the tire building drum 103 is identified as being a predefined distance from the feature or marker 173. Thereafter, the function ends as shown.

In an additional alternative, the center 189 of the tire building drum 103 may be determined using a retractable guide attached to a structure that moves with the tire building drum 103. Such a retractable guide may be configured to move between a first position to a second position. In one embodiment, the retractable guide is stored in the first position and the retractable guide indicate the center 189 of the tire building drum 103 in a field of view of a camera 133 the machine vision system 123 when in the second position. The center 189 of the tire building drum 103 is thus determined based on a three dimensional image of retractable guide in the second position.

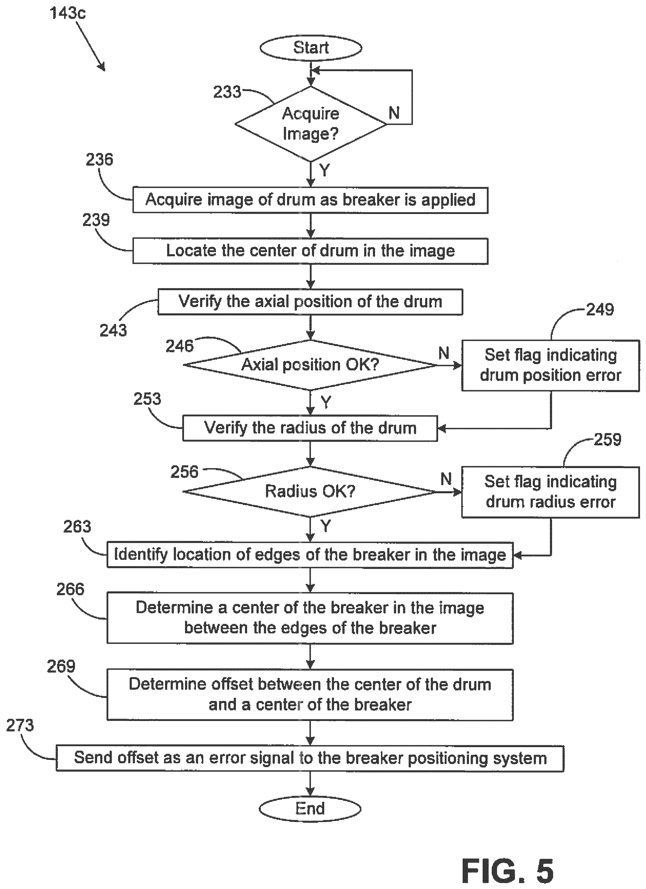

Referring next to FIG. 5, shown is a flowchart that provides one example of the operation of a portion of the image controller 143, denoted herein as image controller 143c, according to various embodiments. It is understood that the flowchart of FIG. 5 provides merely an example of the many different types of functional arrangements that may be employed to implement the operations described herein. As an alternative, the flowchart of FIG. 5 may be viewed as depicting an example of elements of a method implemented in the image controller 143 according to one or more embodiments.

To begin, in box 233 the image controller 143c waits until a time that a 3D image 136a (FIG. 3) is to be acquired as a breaker 114a/b (FIG. 3) is applied to the tire building drum 103 (FIG. 3). In box 236, the 3D image 136a is acquired as a breaker 114a/b is applied thereto and the 3D image 136a is stored in a memory. Thereafter, in box 239, a center 189 (FIG. 3) of the tire building drum 103 is identified in the 3D image 136a as was described above, for example, with reference to FIGS. 3, 4A, and/or 4B above.

Then, in box 243 the axial position of the tire building drum 103 is verified to ensure that it is properly in position A (FIG. 1) or position B (FIG. 1). To verify the position of the tire building drum 103, the position of the center 189 of the tire building drum 103 is compared with a calibration center stored in memory to determine whether the center 189 is within a predefined tolerance of the calibration center, where the calibration center was identified when the machine vision system 123 (FIG. 1) was last calibrated as will be described. Alternatively, a location of one or both of the side edges 183 (FIG. 3) and 186 (FIG. 3) of the tire building drum 103, locations of features of the tire building drum 103, or a location of a marker 173 (FIG. 2) on the tire building drum 103 can be compared with a similar calibration counterpart to verify that the tire building drum 103 is within a predefined tolerance of position A or B (FIG. 1) as determined during initial calibration of the machine vision system 123.

If the axial position of the tire building drum 103 is not within acceptable tolerances, then in box 249 a flag is set in the image controller 143 that causes a warning to be issued that the tire building drum 103 is out of position. An appropriate alarm may be generated to warn operators that the tire building drum 103 is out of position so that appropriate corrective action can be taken. Such a warning may be, for example, a warning light, warning sound, an element on a graphical user interface, or other type of warning indication. Thereafter, the image controller 143c proceeds to box 253. Assuming that the axial position of the tire building drum 103 is within acceptable tolerances of position A or position B, then execution proceeds directly to box 253.

In box 253, the image controller 143c verifies that the radius of the tire building drum is within acceptable tolerance of a desired radius obtained from a specific tire recipe. As was discussed above, the radius of the tire building drum 103 is determined across an uncovered one of the segments 153 of the tire building drum 103 in the 3D image 136a. Given that the radius may vary from point to point along an axis across the uncovered segment 153, an average radius may be calculated from all of the individual radius measurements to compare against the radius identified in a recipe for a given tire in production.

If the radius as determined in box 256 is not within an acceptable tolerance, then in box 259 a flag is set that indicates that a drum radius is outside of acceptable tolerance. An appropriate alarm may be generated to warn operators that the radius of the tire building drum 103 is outside of acceptable tolerance so that appropriate corrective action can be taken. Such a warning may be, for example, a warning light, warning sound, an element on a graphical user interface, or other type of warning indication. Thereafter, the execution proceeds to box 263. If it is determined in box 256 that the radius of the tire building drum 103 is within acceptable tolerances, then the execution proceeds directly to box 263.

In box 263 the first side edge 193 and second side edge 196 of the breaker 114a/b are identified in the 3D image 136a. In identifying a location of each of the side edges 193 and 196, multiple values for the location of the side edges 193 and 196 may be identified along the breaker 114a/b, where variation in the location of the side edges 193 and 196 may occur due to normal process variation. As such, values for the location of the side edges 193 and 196 may be calculated as an average of multiple values for the side edges 193 and 196. According to one embodiment, average values for the location of the side edges 193 and 196 can be calculated from multiple values for individual side edges 193 and 196.

Thereafter, in box 266 a center 199 (FIG. 3) of the breaker 114a/b in the 3D image 136a is determined as the midpoint between the first and second edges 193 and 196. Next, in box 269, a difference between the center 189 of the tire building drum 103 and the center 199 of the breaker 114a/b is identified. This difference may first be identified as a number of pixels between the center 189 and the center 199. The pixels may then be converted to a unit of length such as millimeters. Then, in box 273 the difference expressed in terms of units of length such as millimeters is provided as a breaker position feedback error to a respective one of the breaker guiding systems 116a/b to guide the lateral position of a subsequent breaker 114a/b on a respective application conveyor 106a/b. Thereafter, the execution ends as shown.

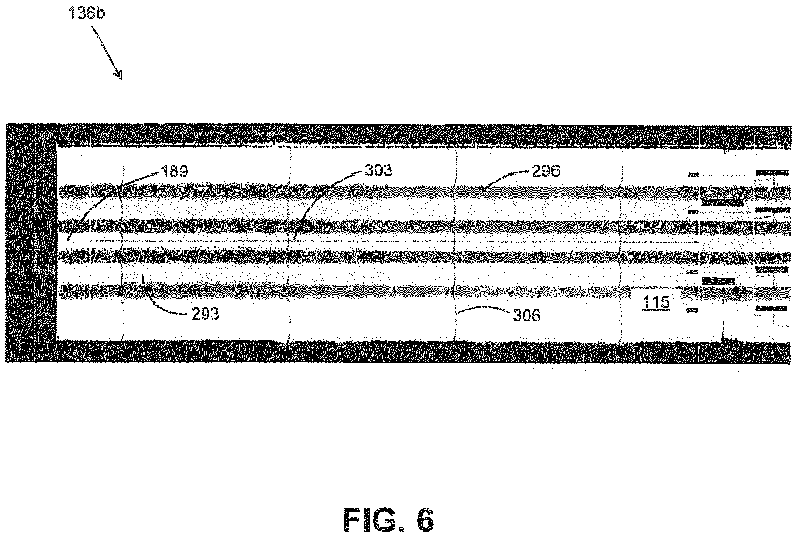

Referring next to FIG. 6, shown is a further example of a 3D image 136 (FIG. 1), denoted herein as 3D image 136b, according to various embodiments. The 3D image 136b depicts an example of a green rubber tread 115 scanned during an application of the green rubber tread 115 to the tire building drum 103 (FIG. 1). As depicted in the 3D image 136b, the green rubber tread 115 includes peaks 293 and valleys 296 that are formed when the green rubber tread 115 is first extruded. Generally, the shape of the green rubber tread 115 depends upon the design of the tire that is to be created therefrom.

As noted, the center 189 of the tire building drum 103 (not shown) is identified, for example, as was discussed with respect to FIGS. 3, 4A, and 4B. The 3D image 136b further provides for multiple profile traces 306 which comprise a line of pixels that represent the height or radius across a single trace of the green rubber tread 115. As contemplated herein, such a radius is the radius from the center of the tire building drum 103 to the surface of the green rubber tread 115 or the breaker 114a/b. A profile trace 306 thus provides a height or radius of the profile of the green rubber tread 115 along the trace across the green rubber tread 115.

According to various embodiments, a tread center 303 is ultimately identified in the 3D image 136b using one of the approaches described in greater detail with reference to later figures. Such approaches may involve, for example, determining the tread center 303 from a die line in the green rubber tread 115 or performing a convolution between a profile trace 306 and a predefined tread profile as will be described. According to one embodiment, each of these approaches involves determining a value in terms of a pixel location in the 3D image 136b for the tread center 303 from a profile trace 306.

As will be described, multiple values for the tread center 303 may be obtained by examining multiple profile traces 306 across various locations of the green rubber tread 115. Depending on the resolution of the 3D image 136b, the values for the tread center 303 may vary from one profile trace 306 to another. In one embodiment, the ultimate location of the tread center 303 in the 3D image 136b may be determined by averaging the locations of multiple different values for the tread center 303 from multiple different profile traces 306.

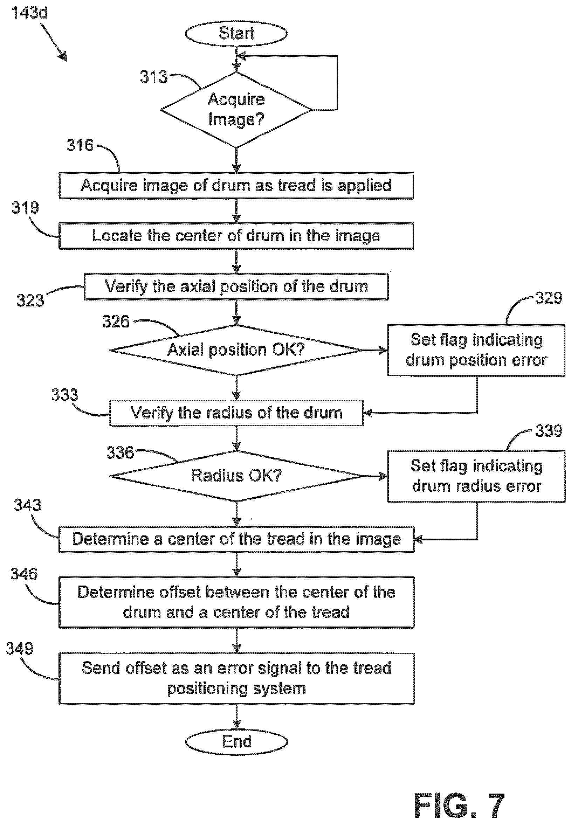

Referring next to FIG. 7, shown is a flowchart that provides one example of the operation of a portion of the image controller 143, denoted herein as image controller 143d, according to various embodiments. It is understood that the flowchart of FIG. 7 provides merely an example of the many different types of functional arrangements that may be employed to implement the operations described herein. As an alternative, the flowchart of FIG. 7 may be viewed as depicting an example of elements of a method implemented in the image controller 143 according to one or more embodiments.

To begin, in box 313 the image controller 143d waits until a time that a 3D image 136b (FIG. 6) is to be acquired as a green rubber tread 115 (FIG. 6) is applied to the tire building drum 103 (FIG. 1). In box 316, the 3D image 136b is acquired as a green rubber tread 115 is applied thereto and the 3D image 136b is stored in a memory. Thereafter, in box 319, a center 189 (FIG. 3) of the tire building drum 103 is identified in the 3D image 136b as was described above, for example, with reference to FIGS. 3, 4A, and/or 4B. Then, in box 323 the axial position of the tire building drum 103 is verified to ensure that it is properly in position A (FIG. 1) or position B (FIG. 1). To verify the position of the tire building drum 103, the position of the center 189 of the tire building drum 103 in the 3D image 136b is compared with a calibration center stored in memory to determine whether the center 189 is within a predefined tolerance of the calibration center, where the calibration center was identified when the machine vision system 123 (FIG. 1) was last calibrated as will be described. Alternatively, a location of one or both of the side edges 183 (FIG. 3) and 186 (FIG. 3) of the tire building drum 103, locations of features of the tire building drum 103, or a location of a marker 173 (FIG. 2) on the tire building drum 103, can be compared with a similar calibration counterpart to verify that the tire building drum 103 is within a predefined tolerance of position A or B (FIG. 1) as determined during initial calibration of the machine vision system 123.

If the axial position of the tire building drum 103 is not within acceptable tolerances, then in box 329 a flag is set in the image controller 143 that causes a warning to be issued that the tire building drum 103 is out of position. Such a warning may be, for example, a warning light, warning sound, an element on a graphical user interface, or other type of warning indication. Thereafter, the image controller 143d proceeds to box 333. Assuming that the axial position of the tire building drum 103 is within acceptable tolerances of position A or position B, then execution proceeds directly to box 333.

In box 333, the image controller 143d verifies that the radius of the tire building drum is within acceptable tolerance of a desired radius obtained from a specific tire recipe. As was discussed above, the radius of the tire building drum 103 is determined across an uncovered one of the segments 153 (FIG. 3) of the tire building drum 103 in the 3D image 136b. Given that the radius may vary from point to point along an axis across the uncovered segment 153, an average radius may be calculated from all of the individual radius measurements to compare against the radius identified in a recipe for a given tire in production. The radius of the tire building drum 103 is set equal to the average radius. In box 336, if the radius of the tire building drum 103 is not within an acceptable tolerance, then in box 339 a flag is set that indicates that the radius of the tire building drum 103 is outside of acceptable tolerance. An appropriate alarm may be generated to warn operators that the radius of the tire building drum 103 is outside of acceptable tolerance so that appropriate corrective action can be taken. Such a warning may be, for example, a warning light, a warning sound, an element on a graphical user interface, or other type of warning indication. Thereafter, the execution proceeds to box 343. If it is determined in box 336 that the radius of the tire building drum 103 is within acceptable tolerances, then the execution proceeds directly to box 343.

In box 343, the tread center 303 (FIG. 6) is determined using one of multiple approaches. According to various embodiments, such approaches may involve, for example, determining the tread center 303 from a die line in the green rubber tread 115, performing a convolution between a profile trace 306 and a predefined tread profile, or some other approach. The approaches involving the die line and the convolution will be described in further detail with reference to later figures.

Once the tread center 303 is identified, then a distance between the center 189 of the tire building drum 103 and the tread center 303 is determined in box 346. This difference may be determined by identifying a number of pixels between the center 189 of the tire building drum 103 and the tread center 303 and converting the number of pixels determined to an actual length in terms of millimeters or other units. Similarly, other distances identified in terms of pixels in the 3D image 136 may be converted to a length in terms of millimeters or other units.

In box 349, the difference between the tread center 303 and the center 189 of the tire building drum 103 is applied to the tread application shifter 117 (FIG. 1) as a tread position feedback error to correct the application of a subsequent green rubber tread 115 onto the tire building drum 103 from the tread application conveyor 113 (FIG. 1). Thereafter, the execution ends as shown.

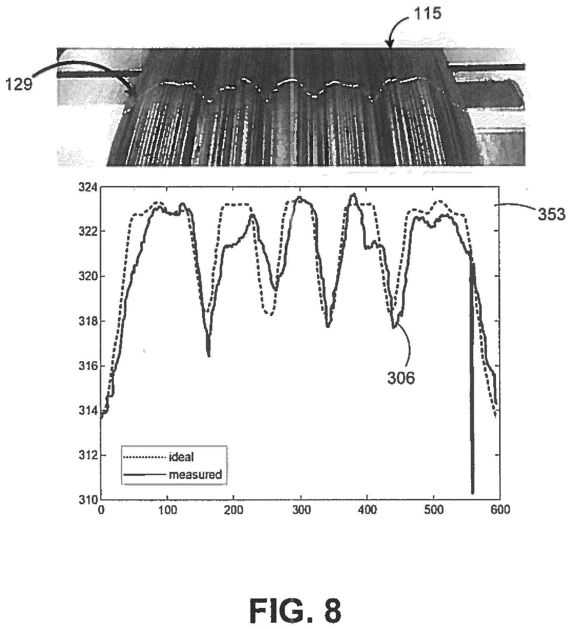

With reference to FIG. 8, shown is an example of an image of a laser trace 129 that falls incident on a green rubber tread 115. A respective one of the 3D cameras 133 take multiple images of the laser trace 129 as the tire building drum 103 rotates as was described above. Ultimately, the image controller (143) generates a profile trace 306. To do so, the height values of the pixels in an image of the laser trace 129 taken by a respective 3D camera 133 are translated into the actual height or radius values of the profile trace 306. This translation may be performed, for example, using a lookup table or by way of some other approach to account for the angle of view and other parameters so that the height or radius of the profile trace 306 accurately reflects the actual height or radius of the green rubber tread 115 at a given instant. The translated values are determined during a calibration process as will be described. Also shown is an example of a predefined tread profile 353 aligned with the profile trace 306 of the green rubber tread. The predefined tread profile 353 is a profile of a green rubber tread 115 that is the same or similar to the dimensions of the mold from which the green rubber tread 115 is extruded.

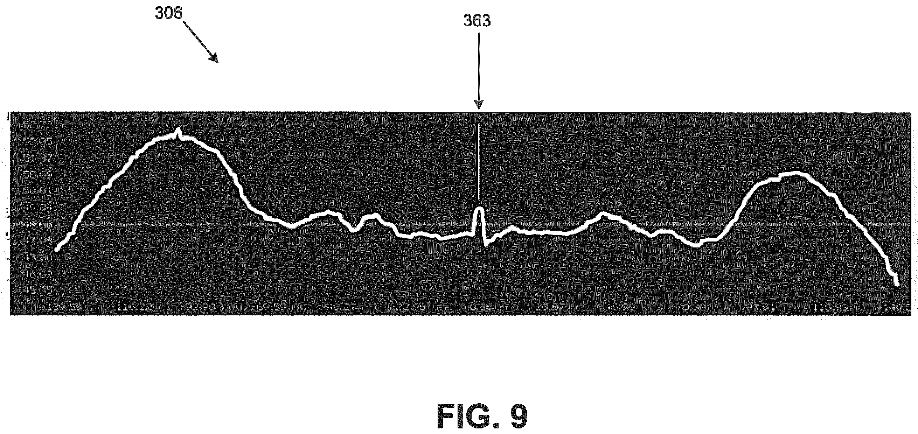

Referring next to FIG. 9, shown is an example of a profile trace 306 taken at various locations along the green rubber tread 115 (FIG. 6) of the 3D image 136b (FIG. 6) according to various embodiments. As shown, a die line in a given green rubber tread 115 is identified by a relatively sharp die line peak 363 in the middle of the green rubber tread 115. The die line peak 363 forms a linear projection along the length of the green rubber tread 115. The die line peak 363 is formed in the green rubber tread 115 when it is extruded from a mold. The die line peak 363 may be detected by identifying the slopes of the die line peak 363 that are generally steeper than other slopes of the green rubber tread 115. According to one embodiment, a highest point on the peak is taken as the tread center 303 (FIG. 6) for a given profile trace 306. Alternatively, a location of the base of the die line peak 363 on either side of the die line peak 363 may be identified and the tread center 303 may be determined as the midpoint between the locations of the bases on either side of the die line peak 363. The location where the base of a die line peak 363 meets the rest of the green rubber tread 115 may be determined by detecting a point where the slope of the die line peak 363 transitions sharply to some other slope.

If the die line peak 363 is deformed such that the attempt to locate a tread center 303 is inconclusive, the profile trace 306 may be discarded and further profile traces 306 may be identified and examined. Such an occurrence is possible given normal process variation in extruding the green rubber tread 115 as can be appreciated.

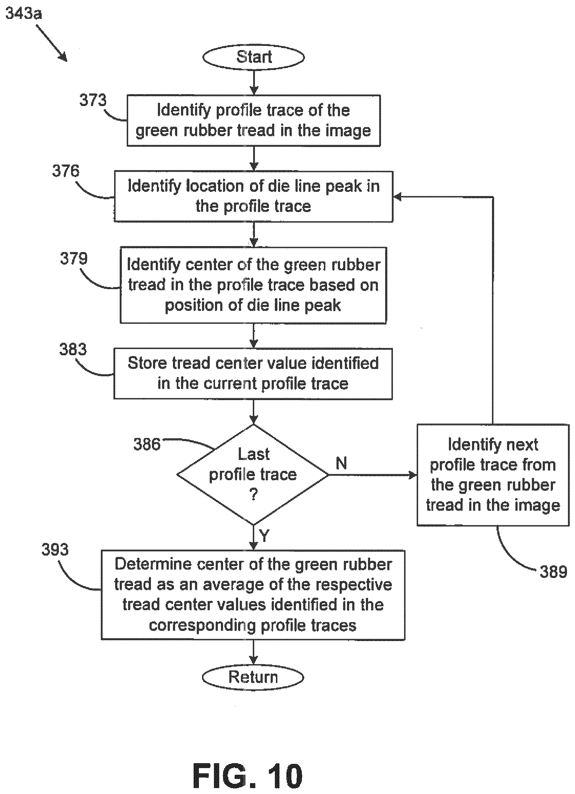

Referring next to FIG. 10, shown is a flowchart that provides one example of how the tread center 303 (FIG. 6) is determined in box 343 (FIG. 9), denoted herein as tread center determination process 343a. As described below, the die line tread center determination process 343a involves determining the tread center 303 from the die line in a green rubber tread 115 (FIG. 6). It is understood that the flowchart of FIG. 10 provides merely an example of the many different types of functional arrangements that may be employed to implement the operations described herein. As an alternative, the flowchart of FIG. 10 may be viewed as depicting an example of elements of a method implemented in the image controller 143 (FIG. 1) according to one or more embodiments.

Beginning at box 373, a first profile trace 306 is identified in the green rubber tread 115 depicted in the 3D image 136b (FIG. 6). The first profile trace 306 may be one of several that are selected at predefined intervals along the green rubber tread 115 or the selection of the first profile trace 306 may be performed in some other manner.

Next, in box 376, a location of the die line peak 363 (FIG. 9) is identified in the current profile trace 306 under consideration. This may be done, for example, by examining the profile trace 306 for the slope of the die line peak 363 which may be a slope greater than a predefined slope or some other approach may be used.

In box 379, an instance of a tread center value of the green rubber tread 115 is identified in the profile trace 306 based on the position of the die line peak 363. In this respect, a center of the die line peak 363 may be taken as the tread center value. Alternatively, a location of the highest point of the die line peak 363 on the profile trace 306 may be taken as the tread center value. In addition, the tread center value may be determined from the die line peak 363 in some other manner.

Next, in box 383, the instance of the tread center 303 determined in box 379 is stored in memory. Then, in box 386 it is determined whether the last profile trace 306 has been considered. The total number of profile traces 306 to be considered may vary where a greater number of profile traces 306 considered may provide for greater accuracy in locating the tread center 303. A maximum number of profile traces 306 that can be considered would be the maximum number of profile traces 306 that exist in the 3D image of the green rubber tread 115.

If there are further profile traces 306 to be considered as determined in box 386, then in box 389 a next profile trace 306 is identified from the green rubber tread 115 as depicted in the 3D image 136a. Thereafter, the process reverts back to box 376 to consider the next profile trace 306 in a manner as described above. Otherwise, the process proceeds to box 393. In view of the above, the die line of the green rubber tread 115 is identified by identifying the instances of the die line peaks 363 as described above.

In box 393, the tread center 303 is calculated as an average of the instances of tread center values obtained from the various profile traces 306 considered as described above. In this manner, a determination of the location of the tread center 303 of the green rubber tread 115 may be made based on the location of the die line of the green rubber tread 115. Thereafter, the process ends as shown. In this manner, the center of the green rubber tread 115 is determined based on the location of the die line of the green rubber tread 115.

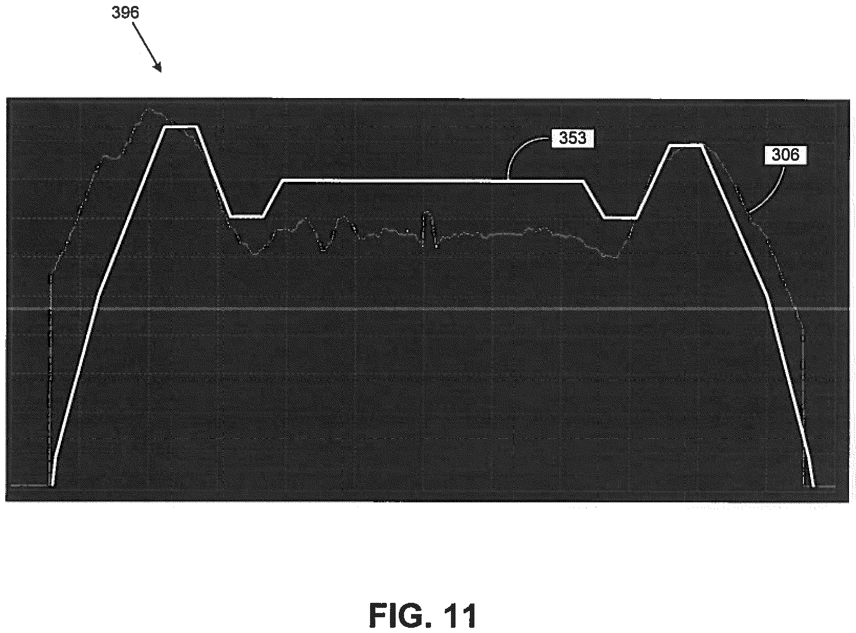

Turning next to FIG. 11, shown is an image that depicts a maximum overlap 396 of a given profile trace 306 (FIG. 6) and a predefined tread profile 353 according to various embodiments. The predefined tread profile 353 is a profile of a green rubber tread 115 that is the same or similar to the dimensions of the mold from which the green rubber tread 115 is extruded. Given process variation, a given profile trace 306 ends up looking a bit different, but loosely follows the predefined tread profile 353 as can be appreciated.

According to one embodiment, to find the tread center 303 (FIG. 6), a mathematical function is performed in which the predefined tread profile 353 is convoluted with the profile trace 306 to identify a tread center value for the respective profile trace 306. The convolution function is expressed as follows:

$$(f * g)(t) = \int_{-\infty}^{\infty} f(\tau)g(t - \tau)d\tau.$$

According to one embodiment, the tread center 303 is determined based on a convolution of one or more profile traces 306 and the predefined tread profile 353, where each profile trace 306 is taken as the function $f(\tau)$ and the predefined tread profile 353 is taken as the function $g(t - \tau)$. During the convolution of a given profile trace 306 and the predefined tread profile 353, a maximum of the convolution function is identified. This maximum can be viewed as indicating a point at which a maximum overlap exists between a given profile trace 306 and the predefined tread profile 353. Note that the actual convolution of a profile trace 306 and the predefined tread profile 353 is performed using discreet values that represent a given profile trace 306 and the predefined tread profile 353.

When the maximum is identified, the tread center value of the profile trace 306 is deemed to be the pixel location that corresponds to the maximum. Multiple tread center values may be obtained by performing multiple instances of convolution between a number of profile traces 306 and the predefined tread profile 353. The tread center 303 is then calculated as an average of the tread center values obtained from the multiple convolution instances.

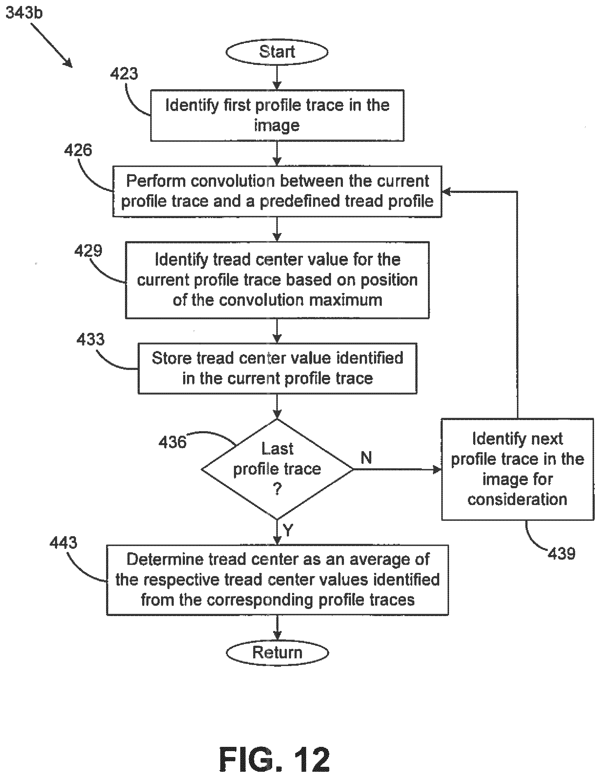

Referring next to FIG. 12, shown is a flowchart that provides one example of how the tread center 303 (FIG. 6) is determined in box 343 (FIG. 7), denoted herein as tread center determination process 343b. As described below, the die line tread center determination process 343b involves performing a convolution between one or more profile traces 306 (FIG. 11) and the predefined tread profile 353 (FIG. 11) for a given green rubber tread 115 (FIG. 6). It is understood that the flowchart of FIG. 12 provides merely an example of the many different types of functional arrangements that may be employed to implement the operations described herein. As an alternative, the flowchart of FIG. 12 may be viewed as depicting an example of elements of a method implemented in the image controller 143 (FIG. 1) according to one or more embodiments.

Beginning at box 423, the tread center determination process 343b identifies a first profile trace 306 in the 3D image 136b (FIG. 6) for consideration. Thereafter, in box 426 a convolution is performed between the current profile trace 306 and the predefined tread profile 353. Next, in box 429 a tread center value is identified for the current profile trace 306 based on a position of the convolution maximum.

Then, in box 433 the tread center value identified in box 429 is stored in a memory. Thereafter, in box 436 it is determined if the last profile trace 306 has been processed to generate a tread center value. If not, then in box 439 a next profile trace 306 is identified in the 3D image 136b for consideration. Thereafter, the process reverts to box 426 to repeat the process with the next profile trace 306. Otherwise, the process proceeds to box 443.

In box 443 the tread center 303 is calculated as an average of the respective tread center values identified from each instance of convolution between a respective profile trace 306 and the predefined tread profile 353. Thereafter, the process ends as shown.

As described above, a loop is repeated for each profile trace 306 considered from the green rubber tread 115 as depicted in the 3D image 136b to obtain multiple tread center values from which an average may be calculated. However, as an additional alternative, a single convolution may be performed between a profile trace 306 and the predefined tread profile 353, and the tread center value resulting therefrom may be taken as the tread center 303.

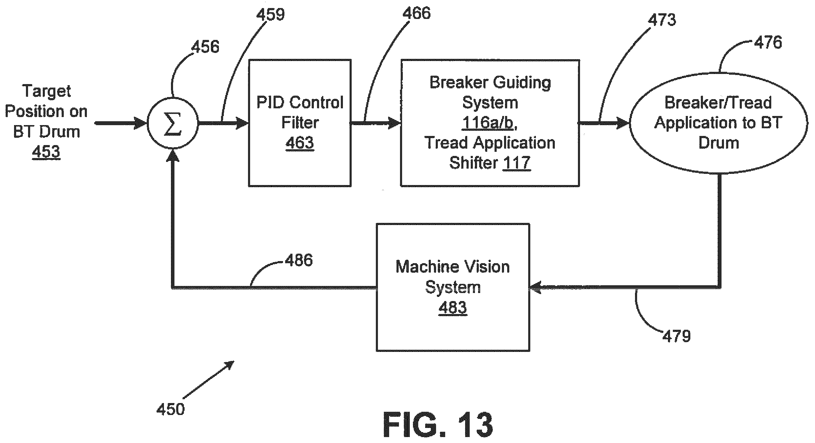

Referring next to FIG. 13, shown is a block diagram of a feedback loop 450 that generates a difference between the center of a tire building drum 103 (FIG. 1) and either the center 199 (FIG. 3) of a breaker 114a/b (FIG. 1) or a tread center 303 (FIG. 6). This difference is then used as a position feedback error that is used to control the breaker guiding systems 116a/b (FIG. 1) or the tread application shifter 117 (FIG. 1).

To begin, a target position input 453 that indicates a desired position on the tire building drum 103 is input to a summing junction 456. According to one embodiment, the target position indicated by the target position input 453 is zero, which indicates a center of the tire building drum 103.

The summing junction 456 generates an error signal 459 based on the feedback received as will be described. The error signal is applied to a proportional-integral-derivative (PID) filter 463 that generates a setpoint adjustment 466. The setpoint adjustment is then used to adjust a setpoint of a respective one of the breaker guiding systems 116a/b (FIG. 1) or the tread application shifter 117. In response to the setpoint adjustment, a physical response 473 occurs in the form of a lateral adjustment by a respective one of the feed conveyors 109 a/b or the tread application shifter 117 in an attempt to minimize the error.

An operation 476 of the tire building machine 100 (FIG. 1) proceeds to cause the next breaker 114a/b or green rubber tread 115 to be applied to the tire building drum 103. This results in a view 479 of a breaker 114a/b or green rubber tread 115 being applied to the tire building drum 103. The machine vision system 483 generates the 3D image 136 (FIG. 1) and generates the difference 486 between the center 189 (FIG. 3) of the tire building drum 103 and the center 199 of a respective breaker 114a/b or the tread center 303 as described above. The difference 486 is then applied to the summing junction 456 to close the loop, thereby generating the error signal 459.

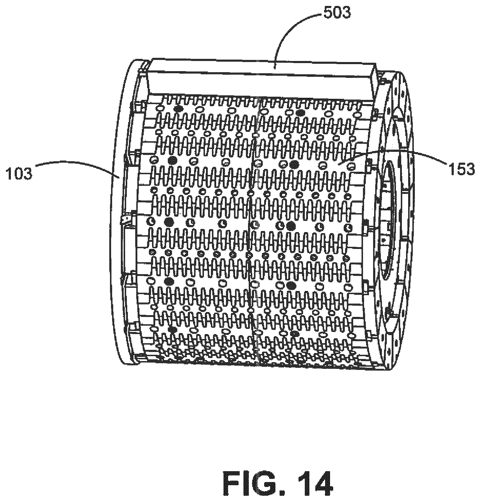

Referring next to FIG. 14, shown is a tire building drum 103 that includes a calibration fixture 503 attached thereto. To calibrate the machine vision system 123, the radius of the tire building drum 103 is set at a known radius. The calibration fixture 503 is attached to one of the segments 153 of the tire building drum 103. The calibration fixture 503 may vary in height from one end to the next, although such variation is not shown in FIG. 14, where the flat calibration fixture 503 is provided for purposes of illustration. Given that the tire building drum 103 is set to a known radius, the radius of all surfaces of the calibration fixture 503 relative to the center of the tire building drum 103 may be determined given that the position of the surfaces of the calibration fixture 503 are known relative to the bottom of the calibration fixture 503 that contacts the tire building drum 103. In this respect, the known radius of the tire building drum 103 comprises a calibration radius.

To calibrate the machine vision systems 123, the tire building drum 103 is placed in position A (FIG. 1) and position B (FIG. 1) to calibrate the input from both 3D cameras 133 (FIG. 1). After the tire building drum 103 is positioned in one of the positions A or B, then the calibration fixture 503 is attached thereto. The calibration procedure described herein is completed in both positions A and B as can be appreciated.

Once the tire building drum 103 is located in a respective position A or B, the laser is directed to the tire building drum 103 and the tire building drum 103 is positioned so that the laser 126 creates a trace across the calibration fixture 503 attached to the tire building drum 103. The 3D camera 126 then generates an axial image trace across the calibration fixture 503. Thereafter, the axial image trace is processed to calibrate the machine vision system 123 as will be described.

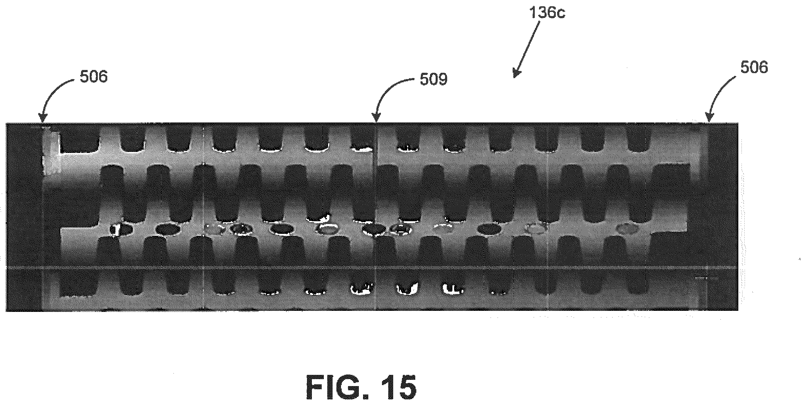

With reference next to FIG. 15, shown is a portion of a 3D image 136, denoted herein as 3D image 136c. Once the machine vision system 123 is calibrated, the calibration fixture 503 (FIG. 14) is removed and the 3D image 136c is generated by the machine vision system 123. The 3D image 136c is generated while the tire building drum 103 is rotated. A portion of a 3D image 136c is shown in FIG. 15.

According to one embodiment, at least one, or both, of the edges 506 of the tire building drum 103 are identified in the 3D image 136c. The location of the edges 506 are stored in a memory as calibrated edge positions for the tire building drum 103. The calibrated edge positions of the tire building drum 103 are stored to be used to verify a position of the tire building drum 103 in positions A and B during a tire build.

In one embodiment, a calibration center 509 of the tire building drum 103 is determined as a midpoint between the first calibration edge position and the second calibration edge position of the tire building drum. The calibration center 509 may be stored in memory for use in verifying a position of the tire building drum 103 in positions A and B during a tire build.

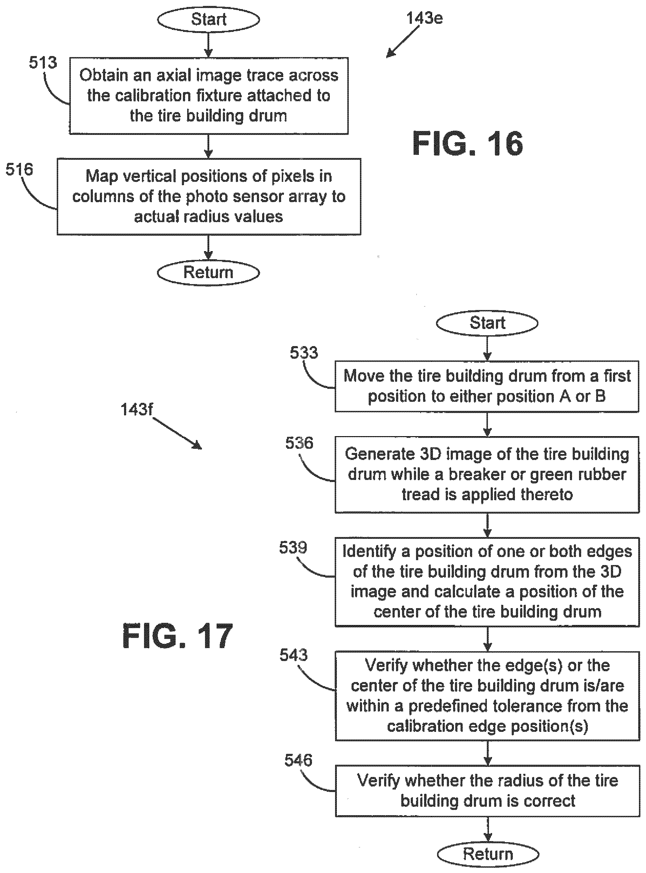

Referring next to FIG. 16, shown is a flowchart that provides one example of a portion of the operation of the image controller 143 (FIG. 1), denoted herein as image controller 143e, that is executed to calibrate the machine vision system 123 to use during the building of tires. It is understood that the flowchart of FIG. 16 provides merely an example of the many different types of functional arrangements that may be employed to implement the operations described herein. As an alternative, the flowchart of FIG. 16 may be viewed as depicting an example of elements of a method implemented in the image controller 143 according to one or more embodiments.

To begin, at box 513 an axial image trace is obtained across the calibration fixture 503 (FIG. 14). The 3D cameras 126 includes a photo sensor array with horizontal rows and vertical columns of pixels. Given the angles at which the lasers 126 and 3D cameras 133 are disposed relative to the calibration fixture 503, the locations of the pixels in the array columns are translated to actual radius values based on the known radius or height of all surfaces of the calibration fixture. Thus, in box 516 the positions of pixels in array columns on the photo sensor array of the respective 3D cameras 122 are mapped to corresponding actual radius values relative to the center of the tire building drum 103 in a lookup table depending on the known radius of all surfaces of the calibration fixture 503. The lookup table can then be used by the image controller 143 to generate the 3D images 136. Thus, a position of each pixel in the axial image trace relative to the center of the tire building drum 130 is known based on a known position of each surface of the calibration fixture 503 relative to the reference radius of the tire building drum 103.

In one embodiment, the calibration fixture 503 may establish a reference radius relative to the calibration radius of the tire building drum 103. In such case, the actual radius values in the lookup table may be expressed in terms of a value representing a portion of a radius added or subtracted from the reference radius.

Thus, the radius of the tire building drum 103 may be determined based on the reference radius determined from the axial image trace. The reference radius may be determined from a predefined surface of the calibration fixture 503. To this end, the reference radius may be determined by calculating an average of a plurality of values from a portion of the axial image trace along the predefined surface of the calibration fixture 503. This is done so that the machine vision system 123 can reliably generate further 3D images 136 (FIG. 1).

In addition, in calibrating the machine vision system 123, the lasers 126 are directed to the calibration fixture 503, where the tire building drum 103 is rotated to a position such that the calibration fixture 503 is in the location where the laser 126 is ultimately fall incident upon the green rubber tread 115. Also, the 3D cameras 133 are each focused to acquire the axial image trace as the laser 126 falling incident to the calibration fixture 503.

Referring next to FIG. 17, shown is a flowchart that provides one example of a further portion of the operation of the image controller 143 (FIG. 1), denoted herein as image controller 143f, that is executed to verify a position of the tire building drum 103 (FIG. 1) when is it moved into position A or B (FIG. 1). It is understood that the flowchart of FIG. 15 provides merely an example of the many different types of functional arrangements that may be employed to implement the operations described herein. As an alternative, the flowchart of FIG. 15 may be viewed as depicting an example of elements of a method implemented in the image controller 143 according to one or more embodiments.

As was mentioned with respect to FIG. 15, the edges 506 (FIG. 15) of the tire building drum 103 are identified and stored in memory as calibrated edge positions to be used to verify the position of the tire building drum 103 during future tire builds when the tire building drum 103 is moved into positions A or B. To determine the edges 506 of the tire building drum 103, the same procedure is employed as was discussed with reference to FIG. 4A above.

Beginning with box 533, the tire building drum 103 is moved from a first position to either position A or B. That is to say, the tire building drum 103 may be moved from some position other than positions A or B to one of positions A or B, or the tire building drum 103 may be moved between positions A and B. In any event, when the tire building drum 103 stops in position A or B, in box 536 a 3D image 136 is generated of the tire building drum 103 while a breaker 114a/b or a green rubber tread 115 is applied to the tire building drum 103.

Next, in box 539 a position of one or both of edges 193 and 196 (FIG. 3) of the tire building drum are identified as was described with reference to FIG. 4A. Also, a position of the center 189 (FIG. 3) of the tire building drum 103 may be determined as the midpoint of the edges 193 and 196 if the positioning of the tire building drum 103 is to be determined based on the center 189 of the tire building drum 103. However, in one embodiment, the verification of the positioning of the tire building drum 103 may be performed with the edges 193 and 196 without determining the center 189 of the tire building drum 103.

In box 543 the accurate positioning of the tire building drum 103 in position A or B is verified by determining whether one or both of the edges 193 and 196 of the tire building drum 103 is/are within a predefined tolerance from the calibration edge positions 506. Alternatively, accurate verification that the tire building drum 103 is in position A or B by verifying that the center 189 of the tire building drum 103 is located within a predefined tolerance from the calibration center 509.

If the tire building drum 103 is positioned such that it is outside of position tolerances associated with positions A or B, then an alarm is generated to alert operators so that corrective action can be taken. Such an alarm may be, for example, a warning light, warning sound, an element on a graphical user interface, or other type of warning indication.

Next, in box 546 the radius of the tire building drum 103 is verified to be within a predefined tolerance of the radius of the tire currently being built by the tire building machine 100 (FIG. 1) as was discussed with reference to FIGS. 5 and 7 above.

If the radius of the tire building drum 103 is outside of a predefined tolerance associated with the recipe of the current tire being made by way of the tire building drum 103, then an alarm is generated to alert operators so that corrective action can be taken. Such an alarm may be, for example, a warning light, warning sound, an element on a graphical user interface, or other type of warning indication.

Thereafter, the process ends as shown.

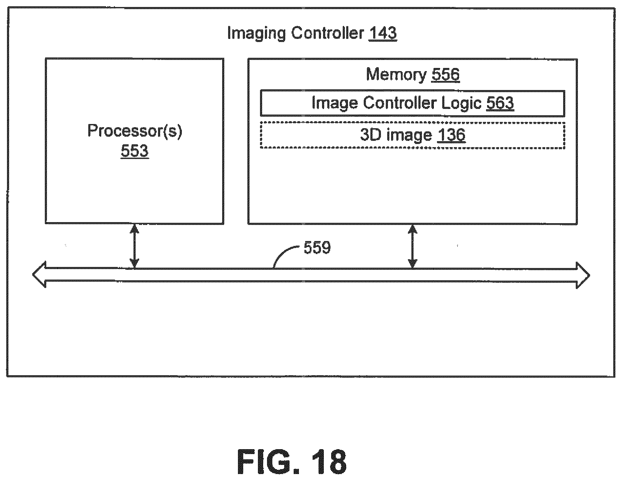

With reference to FIG. 18, shown is a schematic block diagram of one example of the imaging controller 143 according to an embodiment of the present disclosure. The imaging controller 143 comprises a computing device that includes at least one processor circuit, for example, having a processor 553 and a memory 556, both of which are coupled to a local interface 559. The local interface 559 may comprise, for example, a data bus with an accompanying address/control bus or other bus structure as can be appreciated.

Stored in the memory 556 are both data and several components that are executable by the processor 553. In particular, stored in the memory 556 and executable by the processor 553 is image controller logic 563, and potentially other applications. Also stored in the memory 556 is one or more 3D images 136 of the tire building drum 103 (FIG. 1) is depicted with breakers 114a/b (FIG. 1) and or a greed rubber tread 115 (FIG. 1) applied. Other data may be stored in the memory and accessible to the image controller logic 563. In addition, an operating system may be stored in the memory 556 and executable by the processor 553.

It is understood that there may be other applications that are stored in the memory 556 and are executable by the processor 553 as can be appreciated. Where any component discussed herein is implemented in the form of software, any one of a number of programming languages may be employed such as, for example, C, C++, C#, Objective C, Java®, JavaScript®, Perl, PHP, Visual Basic®, Python®, Ruby, Flash®, or other programming languages.

The image controller logic 563 is stored in the memory 556 and is executable by the processor 553. In this respect, the term "executable" means a program file that is in a form that can ultimately be run by the processor 553. Examples of executable programs may be, for example, a compiled program that can be translated into machine code in a format that can be loaded into a random access portion of the memory 556 and run by the processor 553, source code that may be expressed in proper format such as object code that is capable of being loaded into a random access portion of the memory 556 and executed by the processor 553, or source code that may be interpreted by another executable program to generate instructions in a random access portion of the memory 556 to be executed by the processor 553, *etc.* An executable program may be stored in any portion or component of the memory 556 including, for example, random access memory (RAM), read-only memory (ROM), hard drive, solid-state drive, USB flash drive, memory card, optical disc such as compact disc (CD) or digital versatile disc (DVD), floppy disk, magnetic tape, or other memory components.

The memory 556 is defined herein as including both volatile and nonvolatile memory and data storage components. Volatile components are those that do not retain data values upon loss of power. Nonvolatile components are those that retain data upon a loss of power. Thus, the memory 556 may comprise, for example, random access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

Also, the processor 553 may represent multiple processors 553 and/or multiple processor cores and the memory 556 may represent multiple memories 556 that operate in parallel processing circuits, respectively. In such a case, the local interface 559 may be an appropriate network that facilitates communication between any two of the multiple processors 553, between any processor 553 and any of the memories 556, or between any two of the memories 556, *etc.* The local interface 559 may comprise additional systems designed to coordinate this communication, including, for example, performing load balancing. The processor 553 may be of electrical or of some other available construction.

Although the image controller logic 563 and potentially other systems may be embodied in software or code executed by general purpose hardware as discussed above, as an alternative the same may also be fully or partially embodied in dedicated hardware or a combination of software/general purpose hardware and dedicated hardware. If embodied in dedicated hardware, each can be implemented as a circuit or state machine that employs any one of or a combination of a number of technologies. These technologies may include, but are not limited to, discrete logic circuits having logic gates for implementing various logic functions upon an application of one or more data signals, application specific integrated circuits (ASICs) having appropriate logic gates, field-programmable gate arrays (FPGAs), or other components, *etc.* Such technologies are generally well known by those skilled in the art and, consequently, are not described in detail herein.

The flowcharts of FIGS. 4A, 4B, 5, 7, 10, 12, 16, and 17 show the functionality and operation of an implementation of portions of the image controller logic 563 executed by the image controller 143. If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor 553 in a computer system or other system. The machine code may be converted from the source code, *etc.* If embodied in hardware, each block may represent a circuit or a number of interconnected circuits to implement the specified logical function(s).

Although the flowcharts of 4A, 4B, 5, 7, 10, 12, 16, and 17 a specific order of execution, it is understood that the order of execution may differ from that which is depicted. For example, the order of execution of two or more blocks may be scrambled relative to the order shown. Also, two or more blocks shown in succession in FIGS. 4A, 4B, 5, 7, 10, 12, 16, and 17 may be executed concurrently or with partial concurrence. Further, in some embodiments, one or more of the blocks shown in FIGS. 4A, 4B, 5, 7, 10, 12, 16, and 17 may be skipped or omitted. In addition, any number of counters, state variables, warning semaphores, or messages might be added to the logical flow described herein, for purposes of enhanced utility, accounting, performance measurement, or providing troubleshooting aids, *etc.* It is understood that all such variations are within the scope of the present disclosure.

Also, any logic or application described herein, including the image controller logic 563, that comprises software or code can be embodied in any non-transitory computer-readable medium for use by or in connection with an instruction execution system such as, for example, a processor 553 in a computer system or other system. In this sense, the logic may comprise, for example, statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system.

The computer-readable medium can comprise any one of many physical media such as, for example, magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

## Claims

1. An apparatus, comprising:

   a tire building drum (103);
   a machine vision system (123) directed at the tire building drum (103), the machine vision system (123) being configured for producing a three dimensional image (136) of a green rubber tread (115) applied to the tire building drum (103);
at least one processor circuit (143) with a memory comprising instructions, that when executed by the processor circuit, cause the at least one processor circuit to at least:

identify a center (303) of the green rubber tread (115) in the three dimensional image (136); and
identify a difference between the center (303) of the green rubber tread (115) and a target position of the tire building drum (103);
**characterized in that**
said memory comprising instructions, that when executed by the processor circuit (143), cause the at least one processor circuit to identify said center (303) of the green rubber tread (115) in the three dimensional image (136) by performing at least one convolution with at least one profile trace (306) of the green rubber tread (115) and a predefined tread profile (353); and **in that**
said memory comprising instructions, that when executed by the processor circuit (143), cause the at least one processor circuit to use said difference between the center (303) of the green rubber tread (115) and the target position of the tire building drum (103) as a tread position feedback error to position an application of a next green rubber tread (115) onto the tire building drum (103) from a tread conveyor.

2. The apparatus of claim 1, further comprising a tread guiding system that is configured to control a lateral position of the tread (115) onto the tire building drum (103), where the difference is applied as the tread position feedback error to the tread guiding system.

3. The apparatus of claim 1 or 2, wherein the center (303) of the green rubber tread (115) corresponds to a position of a maximum of the at least one convolution.

4. The apparatus of at least one of the previous claims, wherein in identifying of the center (303) of the green rubber tread (115), the instructions, that when executed by the processor circuit (143), further cause the at least one processor circuit to at least:

perform a plurality of convolutions between a corresponding plurality of profile traces (306) of the green rubber tread (115) and the predefined tread profile (353);
identify a plurality of tread center values of the green rubber tread (115) from corresponding ones of the convolutions; and
generate a tread center of the green rubber tread (115) as an average of the tread center values (303) of the green rubber tread (115).

5. The apparatus of at least one of the previous claims, wherein the instructions, when executed by the processor circuit (143), further cause the at least one processor circuit to determine the target position of the tire building drum (103).

6. The apparatus of at least one of the previous claims, wherein the target position further comprises a center of the tire building drum (103) is determined by identifying a first edge (183) and a second edge (186) of the tire building drum (103), and determining a midpoint between the first and second edges as the center (189) of the tire building drum (103).

7. The apparatus of at least one of the previous claims, wherein the center (189) of the tire building drum (103) is determined relative to a mark on the tire building drum (103) and/or wherein the center (189) of the tire building drum (103) is determined relative to a physical feature of the tire building drum.

8. The apparatus of at least one of the previous claims, wherein

the difference further comprises a first difference;
the machine vision system (123) is configured to produce a three dimensional image (136a) of a breaker (114a, 114b) applied to the tire building drum (103) from a breaker application conveyor; and
the instructions, when executed by the processor circuit (143), further cause the at least one processor circuit to:

identify a center (199) of the breaker (114a, 114b) in the three dimensional image (136a);
identify a second difference between the center (199) of the breaker (114a, 114b) and the target position of the tire building drum (103); and
use the second difference as a feedback error to position a next breaker on the application conveyor.

9. The apparatus of at least one of the previous claims, further comprising a breaker guiding system (116a) that controls a lateral position of the breaker (114a, 114b) onto the application conveyor, where the second difference is applied as the tread position feedback error to the breaker guiding system (116a).

10. A method, comprising:

directing a machine vision system (123) to a tire building drum (103) in a tire building machine (100), the machine vision system (123) producing a three dimensional image (136) of a green rubber tread (115) applied to the tire building drum (103);

identifying a center (303) of the green rubber tread (115) in the three dimensional image (136); and

identifying a difference between the center (303) of the green rubber tread (115) and a center (189) of the tire building drum (103);

**characterized in that** the method further comprises:

identifying said center (303) of the green rubber tread (115) in the three dimensional image (136) by performing at least one convolution with at least one profile trace (306) of the green rubber tread (115) and a predefined tread profile (353); and

using said difference as a tread position feedback error to position an application of a next green rubber tread (115) onto the tire building drum (103) from a tread conveyor.

11. The method of claim 10, wherein a tread guiding system controls a lateral position of the tread (115) onto the tire building drum (103), the method further comprising applying the difference as the tread position feedback error to the tread guiding system.

12. The method of claim 10 or 11, wherein the center (303) of the green rubber tread (115) corresponds to a position of a maximum of the at least one convolution.

13. The method of at least one of the previous claims 10 to 12, wherein the identifying of the center (303) of the green rubber tread (115) further comprises:

performing a plurality of convolutions between a corresponding plurality of profile traces (306) of the green rubber tread (115) and the predefined profile (353);

identifying a plurality of tread center values of the green rubber tread (115) from corresponding ones of the convolutions; and

generating the tread center of the green rubber tread (115) as an average of the tread center values (303) of the green rubber tread (115).

14. The method of at least one of the previous claims 10 to 13, wherein

the difference further comprises a first difference;

the machine vision system (123) produces a three dimensional image (136a) of a breaker (114a, 114b) applied to the tire building drum (103) from a breaker application conveyor; and

the instructions, when executed by the processor circuit, cause the at least one processor circuit to:

identify a center (199) of the breaker (114a, 114b) in the three dimensional image (136a);

identify a second difference between the center (199) of the breaker (114a, 114b) and the target position of the tire building drum (103); and

use the second difference as a feedback error to position a next breaker on the application conveyor.

15. The method of at least one of the previous claims, further comprising determining the center (189) of the tire building drum (103) relative to a physical feature of the tire building drum.

**Patentansprüche**

1. Vorrichtung, die Folgendes umfasst:

eine Reifenaufbautrommel (103);

ein visuelles Inspektionssystem (123), das auf die Reifenaufbautrommel (103) ausgerichtet ist;

wobei das visuelle Inspektionssystem (123) so ausgebildet ist, dass es ein dreidimensionales Bild (136) einer auf die Reifenaufbautrommel (103) aufgebrachten Lauffläche aus unvulkanisiertem Kautschuk (115) erzeugt;

zumindest eine Prozessorschaltung (143), die mit einem Speicher ausgestattet ist, der Befehle umfasst, die, wenn sie von der Prozessorschaltung ausgeführt werden, bewirken, dass die mindestens eine Prozessorschaltung mindestens:

ein Zentrum (303) der Lauffläche aus unvulkanisiertem Kautschuk (115) im dreidimensionalen Bild (136) identifiziert; und

eine Differenz zwischen dem Zentrum (303) der Lauffläche aus unvulkanisiertem Kautschuk (115) und einer Zielposition der Reifenaufbautrommel (103) identifiziert;

**dadurch gekennzeichnet, dass**

der oben genannte Speicher Befehle umfasst, die, wenn sie von der Prozessorschaltung (143) ausgeführt werden, bewirken, dass die zumindest eine Prozessorschaltung das oben genannte Zentrum (303) der Lauffläche aus unvulkanisiertem Kautschuk (115) in dem dreidimensionalen Bild (136) identifiziert, indem sie zumindest eine Windung mit zumindest einem Profilverlauf (306) der Lauffläche aus unvulkanisiertem Kautschuk (115) und einem vordefinierten Laufflächenprofil (353) durchführt; und dadurch, dass

der oben genannte Speicher Befehle umfasst, die, wenn sie von der Prozessorschaltung (143) ausgeführt werden, bewirken, dass die zumindest eine Prozessorschaltung die oben genannte Differenz zwischen dem Zentrum (303) der Lauffläche aus unvulkanisiertem Kautschuk (115) und der Zielposition der Reifenaufbautrommel (103) in Form einer Rückmeldung über einen Fehler der Positionierung der Lauffläche, um eine nachfolgende Lauffläche aus unvulkanisiertem Kautschuk (115) von einem Laufflächenförderer auf die Reifenaufbautrommel (103) aufzubringen.

2. Vorrichtung nach Anspruch 1, die ferner ein Laufflächenführungssystem umfasst, das so konfiguriert ist, dass es eine seitliche Position der Lauffläche (115) auf der Reifenaufbautrommel (103) einstellt; wobei die Differenz in Form einer Rückmeldung über einen Fehler der Position der Lauffläche an das Laufflächenführungssystem angewendet wird.

3. Vorrichtung nach Anspruch 1 oder 2, wobei das Zentrum (303) der Lauffläche aus unvulkanisiertem Kautschuk (115) einer Position eines Maximums der zumindest einen Windung entspricht.

4. Vorrichtung nach mindestens einem der vorhergehenden Ansprüche, wobei bei der Identifizierung des Zentrums (303) der Lauffläche aus unvulkanisiertem Kautschuk (115) die Befehle, wenn sie von der Prozessorschaltung (143) ausgeführt werden, ferner bewirken, dass die zumindest eine Prozessorschaltung mindestens:

   mehrere Windungen zwischen einer entsprechenden Anzahl von Profilverläufen (306) der Lauffläche aus unvulkanisiertem Kautschuk (115) und dem vordefinierten Laufflächenprofil (353) durchführt;
   eine Anzahl von Werten des Laufflächenzentrums der Lauffläche aus unvulkanisiertem Kautschuk aus entsprechenden Windungen identifiziert; und
   ein Laufflächenzentrum der unvulkanisierten Lauffläche in Form eines Mittelwerts der Werte des Laufflächenzentrums (303) der Lauffläche aus unvulkanisiertem Kautschuk (115) erzeugt.

5. Vorrichtung nach mindestens einem der vorhergehenden Ansprüche, wobei die Befehle, wenn sie von der Prozessorschaltung (143) ausgeführt werden, ferner bewirken, dass der zumindest eine Prozessor die Zielposition der Reifenaufbautrommel (103) bestimmt.

6. Vorrichtung nach mindestens einem der vorhergehenden Ansprüche, wobei die Zielposition ferner ein Zentrum der Reifenaufbautrommel (103) umfasst, das durch die Identifizierung einer ersten Kante (183) und einer zweiten Kante (186) der Reifenaufbautrommel (103) und das Bestimmen eines Mittelpunktes zwischen der ersten und der zweiten Kante als Zentrum (189) der Reifenaufbautrommel (103) bestimmt wird.

7. Vorrichtung nach zumindest einem der vorhergehenden Ansprüche, wobei das Zentrum (189) der Reifenaufbautrommel (103) in Bezug auf einen Markierungspunkt auf der Reifenaufbautrommel (103) bestimmt wird und/oder wobei das Zentrum (189) der Reifenaufbautrommel (103) in Bezug auf ein physikalisches Merkmal der Reifenaufbautrommel bestimmt wird.

8. Vorrichtung nach mindestens einem der vorhergehenden Ansprüche, wobei:

   die Differenz ferner eine erste Differenz umfasst;
   das visuelle Inspektionssystem (123) so ausgebildet ist, dass es ein dreidimensionales Bild (136a) einer Zwischenbaulage (114a, 114b) erzeugt, die von einem Aufbringungsförderer der Zwischenbaulage auf die Reifenaufbautrommel (103) angewendet wird; und
   die Befehle, wenn sie von der Prozessorschaltung (143) ausgeführt werden, ferner bewirken, dass der zumindest eine Prozessor:

      ein Zentrum (199) der Zwischenbaulage (114a, 114b) in dem dreidimensionalen Bild (136a) identifiziert;
      eine zweite Differenz zwischen dem Zentrum (199) der Zwischenbaulage (114a, 114b) und der Zielposition der Reifenaufbautrommel (103) identifiziert; und
      die zweite Differenz in Form einer Rückmeldung über einen Fehler verwendet, um eine nachfolgende Zwischenbaulage auf dem Aufbringungsförderer zu positionieren.

9. Vorrichtung nach zumindest einem der vorstehenden Ansprüche, die ferner ein Führungssystem (116a) für die Zwischenbaulage umfasst, das eine seitliche Position der Zwischenbaulage (114a, 114b) auf dem Aufbringungsförderer einstellt; wobei die zweite Differenz in Form einer Rückmeldung über einen Fehler der Position der Lauffläche auf das Führungssystem (116a) für die Zwischenbaulage angewendet wird.

10. Verfahren, das Folgendes umfasst:

das Ausrichten eines visuellen Inspektionssystems (123) auf eine Reifenaufbautrommel (103) in einer Reifenaufbaumaschine (100); wobei das visuelle Inspektionssystem (123) ein dreidimensionales Bild (136) einer auf die Reifenaufbautrommel (103) aufgebrachten Lauffläche aus unvulkanisiertem Kautschuk (115) erzeugt; das Identifizieren eines Zentrums (303) der Lauffläche aus unvulkanisiertem Kautschuk (115) in dem dreidimensionalen Bild (136); und das Identifizieren einer Differenz zwischen dem Zentrum (303) der Lauffläche aus unvulkanisiertem Kautschuk (115) und einem Zentrum (189) der Reifenaufbautrommel (103); **dadurch gekennzeichnet, dass** das Verfahren ferner Folgendes umfasst:

das Identifizieren des Zentrums (303) der Lauffläche aus unvulkanisiertem Kautschuk (115) in dem dreidimensionalen Bild (136) durch die Durchführung zumindest einer Windung mit zumindest einem Profilverlauf (306) der Lauffläche aus unvulkanisiertem Kautschuk (115) und einem vordefinierten Laufflächenprofil (353); und das Verwenden der oben genannten Differenz in Form einer Rückmeldung über einen Fehler der Positionierung der Lauffläche, um eine nachfolgende Lauffläche aus unvulkanisiertem Kautschuk (115) von einem Laufflächenförderer auf die Reifenaufbautrommel (103) aufzubringen.

11. Verfahren nach Anspruch 10, wobei ein Laufflächenführungssystem eine seitliche Position der Lauffläche (115) auf der Reifenaufbautrommel (103) einstellt; wobei das Verfahren ferner das Anwenden der Differenz auf das Laufflächenführungssystem in Form einer Rückmeldung über einen Fehler der Position der Lauffläche umfasst.

12. Verfahren nach Anspruch 10 oder 11, wobei das Zentrum (303) der Lauffläche aus unvulkanisiertem Kautschuk (115) einer Position eines Maximums der zumindest einen Windung entspricht.

13. Verfahren nach zumindest einem der vorstehenden Ansprüche 10 bis 12, wobei die Identifizierung des Zentrums (303) der Lauffläche aus unvulkanisiertem Kautschuk (115) ferner das Folgende umfasst:

das Durchführen mehrerer Windungen zwischen einer entsprechenden Anzahl von Profilverläufen (306) der Lauffläche aus unvulkanisiertem Kautschuk (115) und dem vordefinierten Laufflächenprofil (353); das Identifizieren einer Anzahl von Werten des Laufflächenzentrums der Lauffläche aus unvulkanisiertem Kautschuk (115) aus entsprechenden Windungen; und das Erzeugen des Laufflächenzentrums der Lauffläche aus unvulkanisiertem Kautschuk (115) in Form eines Mittelwerts der Werte des Laufflächenzentrums (303) der Lauffläche aus unvulkanisiertem Kautschuk (115).

14. Verfahren nach zumindest einem der vorstehenden Ansprüche 10 bis 13, wobei:

die Differenz ferner eine erste Differenz umfasst; das visuelle Inspektionssystem (123) ein dreidimensionales Bild (136a) einer von einem Aufbringungsförderer der Zwischenbaulage auf die Reifenaufbautrommel (103) aufgebrachten Zwischenbaulage (114a, 114b) erzeugt; und die Befehle, wenn sie von der Prozessorschaltung (143) ausgeführt werden, bewirken, dass der zumindest eine Prozessor:

ein Zentrum (199) der Zwischenbaulage (114a, 114b) in dem dreidimensionalen Bild (136a) identifiziert; eine zweite Differenz zwischen dem Zentrum (199) der Zwischenbaulage (114a, 114b) und der Zielposition der Reifenaufbautrommel (103) identifiziert; und die zweite Differenz in Form einer Rückmeldung über einen Fehler verwendet, um eine nachfolgende Zwischenbaulage auf dem Aufbringungsförderer zu positionieren.

15. Verfahren nach zumindest einem der vorstehenden Ansprüche, das ferner das Bestimmen des Zentrums (189) der Reifenaufbautrommel (103) in Bezug auf ein physikalisches Merkmal der Reifenaufbautrommel umfasst.

**Revendications**

1. Appareil qui comprend :

un tambour de confection de bandage (103) ; un système d'inspection visuelle (123) qui est orienté sur le tambour de confection de bandage (103) ; dans lequel le système d'inspection visuelle (123) est configuré pour produire une image en trois dimensions (136) d'une bande de roulement en caoutchouc non vulcanisé (115) qui est appliquée sur le tambour de confection de bandage (103) ;

au moins un circuit de processeur (143) qui est équipé d'une mémoire qui comprend des instructions qui, lorsque ces dernières sont exécutées par le circuit de processeur, font en sorte que ledit au moins un circuit de processeur, au minimum :

> identifie un centre (303) de la bande de roulement en caoutchouc non vulcanisé (115) dans l'image en trois dimensions (136) ; et
>
> identifie une différence entre le centre (303) de la bande de roulement en caoutchouc non vulcanisé (115) et une position cible du tambour de confection de bandage (103) ;
> **caractérisé en ce que**
> ladite mémoire comprend des instructions qui, lorsque ces dernières sont exécutées par le circuit de processeur (143), font en sorte que ledit au moins un circuit de processeur identifie ledit centre (303) de la bande de roulement en caoutchouc non vulcanisé (115) dans l'image en trois dimensions (136) par la réalisation d'au moins une convolution avec au moins un tracé de profil (306) de la bande de roulement en caoutchouc non vulcanisé (115) et un profil de bande de roulement prédéfini (353) ; et **en ce que**
> ladite mémoire comprend des instructions qui, lorsque ces dernières sont exécutées par le circuit de processeur (143), font en sorte que ledit au moins un circuit de processeur utilise ladite différence entre le centre (303) de la bande de roulement en caoutchouc non vulcanisé (115) et la position cible du tambour de confection de bandage (103) sous la forme d'un retour d'erreur de la position de la bande de roulement afin de positionner une application d'une bande de roulement suivante en caoutchouc non vulcanisé (115) sur le tambour de confection de bandage (103) à partir d'un transporteur de bande de roulement.

2. Appareil selon la revendication 1, qui comprend en outre un système de guidage de bande de roulement, qui est configuré pour régler une position latérale de la bande de roulement (115) sur le tambour de confection de bandage (103) ; dans lequel on applique la différence au système de guidage de la bande de roulement sous la forme d'un retour d'erreur de la position de la bande de roulement.

3. Appareil selon la revendication 1 ou 2, dans lequel le centre (303) de la bande de roulement en caoutchouc non vulcanisé (115) correspond à une position d'un maximum de ladite au moins une convolution.

4. Appareil selon au moins une des revendications précédentes, dans lequel lors de l'identification du centre (303) de la bande de roulement en caoutchouc non vulcanisé (115), les instructions, lorsqu'elles sont exécutées par le circuit de processeur (143), font en outre en sorte que ledit au moins un circuit de processeur au moins :

> réalise un certain nombre de convolutions entre un certain nombre correspondant de tracés de profils (306) de la bande de roulement en caoutchouc non vulcanisé (115) et le profil de bande de roulement prédéfini (353) ;
>
> > - identifie un certain nombre de valeurs du centre de bande de roulement de la bande de roulement en caoutchouc non vulcanisé (115) à partir de convolutions correspondantes ; et
>
> génère un centre de bande de roulement de la bande de roulement en caoutchouc non vulcanisé (115) sous la forme d'une moyenne des valeurs du centre de bande de roulement (303) de la bande de roulement en caoutchouc non vulcanisé (115).

5. Appareil selon au moins une des revendications précédentes, dans lequel les instructions, lorsqu'elles sont exécutées par le circuit de processeur (143), font en outre en sorte que ledit au moins un circuit de processeur détermine la position cible du tambour de confection de bandage (103).

6. Appareil selon au moins une des revendications précédentes, dans lequel la position cible comprend en outre un centre du tambour de confection de bandage (103) que l'on détermine par l'intermédiaire de l'identification d'un premier bord (183) et d'un deuxième bord (186) du tambour de confection de bandage (103), et de la détermination d'un point médian entre le premier et le deuxième bord comme étant le centre (189) du tambour de confection de bandage (103).

7. Appareil selon au moins une des revendications précédentes, dans lequel on détermine le centre (189) du tambour de confection de bandage (103) par rapport à un repère sur tambour de confection de bandage (103) et/ou dans lequel on détermine le centre (189) du tambour de confection de bandage (103) par rapport à une caractéristique physique du tambour de confection de bandage.

8. Appareil selon au moins une des revendications précédentes, dans lequel :

la différence comprend en outre une première différence ;
le système d'inspection visuelle (123) est configuré pour produire une image en trois dimensions (136a) d'une nappe de sommet (114a, 114b) qui est appliquée sur le tambour de confection de bandage (103) à partir d'un transporteur d'application de nappe de sommet ; et
les instructions, lorsqu'elles sont exécutées par le circuit de processeur (143), font en outre en sorte que ledit au moins un circuit de processeur :

identifie un centre (199) de la nappe de sommet (114a, 114b) dans l'image en trois dimensions (136a) ;
identifie une deuxième différence entre le centre (199) de la nappe de sommet (114a, 114b) et la position cible du tambour de confection de bandage (103) ; et
utilise la deuxième différence à titre de retour d'erreur pour positionner une nappe de sommet ultérieure sur le transporteur d'application.

9. Appareil selon au moins une des revendications précédentes, qui comprend en outre un système de guidage de nappe de sommet (116a) qui règle une position latérale de la nappe de sommet (114a, 114b) sur le transporteur d'application ; dans lequel on applique la deuxième différence au système de guidage (116a) de la la nappe de sommet sous la forme d'un retour d'erreur de la position de la bande de roulement.

10. Procédé qui comprend le fait de :

orienter un système d'inspection visuelle (123) sur un tambour de confection de bandage (103) dans une machine de confection de bandage (100) ; dans lequel le système d'inspection visuelle (123) produit une image en trois dimensions (136) d'une bande de roulement en caoutchouc non vulcanisé (115) qui est appliquée sur le tambour de confection de bandage (103) ;
identifier un centre (303) de la bande de roulement en caoutchouc non vulcanisé (115) dans l'image en trois dimensions (136) ; et
identifier une différence entre le centre (303) de la bande de roulement en caoutchouc non vulcanisé (115) et un centre (189) du tambour de confection de bandage (103) ;
**caractérisé en ce que** le procédé comprend en outre le fait de :

identifier ledit centre (303) de la bande de roulement en caoutchouc non vulcanisé (115) dans l'image en trois dimensions (136) par la réalisation d'au moins une convolution avec au moins un tracé de profil (306) de la bande de roulement en caoutchouc non vulcanisé (115) et un profil de bande de roulement prédéfini (353) ; et
utilise ladite différence sous la forme d'un retour d'erreur de la position de la bande de roulement afin de positionner une application d'une bande de roulement suivante en caoutchouc non vulcanisé (115) sur le tambour de confection de bandage (103) à partir d'un transporteur de bande de roulement.

11. Procédé selon la revendication 10, dans lequel un système de guidage de bande de roulement règle une position latérale de la bande de roulement (115) sur le tambour de confection de bandage (103) ; dans lequel le procédé comprend en outre le fait d'appliquer la différence au système de guidage de la bande de roulement sous la forme d'un retour d'erreur de la position de la bande de roulement.

12. Procédé selon la revendication 10 ou 11, dans lequel le centre (303) de la bande de roulement en caoutchouc non vulcanisé (115) correspond à une position d'un maximum de ladite au moins une convolution.

13. Procédé selon au moins une des revendications précédentes 10 à 12, dans lequel l'identification du centre (303) de la bande de roulement en caoutchouc non vulcanisé (115) comprend en outre le fait de :

réaliser un certain nombre de convolutions entre un certain nombre correspondant de tracés de profils (306) de la bande de roulement en caoutchouc non vulcanisé (115) et le profil de bande de roulement prédéfini (353) ;
identifier un certain nombre de valeurs du centre de bande de roulement de la bande de roulement en caoutchouc non vulcanisé (115) à partir de convolutions correspondantes ; et
générer le centre de bande de roulement de la bande de roulement en caoutchouc non vulcanisé (115) sous la forme d'une moyenne des valeurs du centre de bande de roulement (303) de la bande de roulement en caoutchouc non vulcanisé (115).

14. Procédé selon au moins une quelconque des revendications précédentes 10 à 13, dans lequel :

la différence comprend en outre une première différence ;

le système d'inspection visuelle (123) produit une image en trois dimensions (136a) d'une nappe de sommet (114a, 114b) qui est appliquée sur le tambour de confection de bandage (103) à partir d'un transporteur d'application de nappe de sommet ; et
les instructions, lorsqu'elles sont exécutées par le circuit de processeur (143), font en sorte que ledit au moins un circuit de processeur :

identifie un centre (199) de la nappe de sommet (114a, 114b) dans l'image en trois dimensions (136a) ;
identifie une deuxième différence entre le centre (199) de la nappe de sommet (114a, 114b) et la position cible du tambour de confection de bandage (103) ; et
utilise la deuxième différence à titre de retour d'erreur pour positionner une nappe de sommet ultérieure sur le transporteur d'application.

15. Procédé selon au moins une quelconque des revendications précédentes, qui comprend en outre le fait de déterminer le centre (189) du tambour de confection de bandage (103) par rapport à une caractéristique physique du tambour de confection de bandage.

FIG. 1

103

163

166

153

173

156

169

# FIG. 2

FIG. 3

143a

```
         ┌──────────┐
         │  Start   │
         └────┬─────┘
              │
    ┌─────────▼──────────┐  203
    │ Identify first edge of the │
    │   tire building drum    │
    └─────────┬──────────┘
              │
    ┌─────────▼──────────┐  206
    │ Identify second edge of │
    │   the tire building drum │
    └─────────┬──────────┘
              │
 ┌────────────▼─────────────┐  209
 │  Determine center of the tire  │
 │  building drum as the midpoint │
 │ between the first and second edges │
 └────────────┬─────────────┘
              │
         ┌────▼─────┐
         │   End    │
         └──────────┘
```

# FIG. 4A

143b

```
         ┌──────────┐
         │  Start   │
         └────┬─────┘
              │
    ┌─────────▼──────────┐  213
    │  Identify a feature/marker │
    │   of the tire building drum │
    └─────────┬──────────┘
              │
 ┌────────────▼─────────────┐  216
 │  Determine center of the tire  │
 │  building drum relative to the │
 │   feature/marker of the tire   │
 │        building drum          │
 └────────────┬─────────────┘
              │
         ┌────▼─────┐
         │   End    │
         └──────────┘
```

# FIG. 4B

143c

```
                          ( Start )
                              │
                              ▼
     233 ─┐              ◇ Acquire ◇────N────┐
          │              ◇ Image? ◇         │
                              │              │
                              │ Y            │
     236 ─┐                   ▼              │
          │  ┌──────────────────────────────────────┐
          └──│ Acquire image of drum as breaker is applied │
             └──────────────────────────────────────┘
     239 ─┐                   │
          │  ┌──────────────────────────────────────┐
          └──│ Locate the center of drum in the image │
             └──────────────────────────────────────┘
                              │
             ┌──────────────────────────────────────┐
             │ Verify the axial position of the drum │
             └──────────────────────────────────────┘
     243 ─┘                   │
                              ▼                                    ─249
     246 ─┐         ◇ Axial position OK? ◇──N──┐  ┌──────────────────────┐
          │         ◇                    ◇     └──│ Set flag indicating   │
                              │                   │ drum position error   │
                              │ Y                 └──────────────────────┘
     253 ─┐                   ▼                              │
          │  ┌──────────────────────────────┐◄──────────────┘
          └──│ Verify the radius of the drum │
             └──────────────────────────────┘
                              │                                    ─259
     256 ─┐                   ▼                   ┌──────────────────────┐
          │         ◇ Radius OK? ◇──N─────────────│ Set flag indicating   │
          └─────────◇          ◇                  │ drum radius error     │
                              │ Y                 └──────────────────────┘
     263 ─┐                   ▼                              │
          │  ┌──────────────────────────────────────────┐◄──┘
          └──│ Identify location of edges of the breaker in the image │
             └──────────────────────────────────────────┘
     266 ─┐                   │
          │  ┌──────────────────────────────────────────┐
          └──│ Determine a center of the breaker in the image │
             │       between the edges of the breaker      │
             └──────────────────────────────────────────┘
     269 ─┐                   │
          │  ┌──────────────────────────────────────────┐
          └──│ Determine offset between the center of the drum │
             │        and a center of the breaker         │
             └──────────────────────────────────────────┘
     273 ─┐                   │
          │  ┌──────────────────────────────────────────────────┐
          └──│ Send offset as an error signal to the breaker positioning system │
             └──────────────────────────────────────────────────┘
                              │
                          (  End  )
```

**FIG. 5**

FIG. 6

143d

Start

313 — Acquire Image?

316 — Acquire image of drum as tread is applied

319 — Locate the center of drum in the image

Verify the axial position of the drum
323

326 — Axial position OK? → 329 — Set flag indicating drum position error

333 — Verify the radius of the drum

336 — Radius OK? → 339 — Set flag indicating drum radius error

343 — Determine a center of the tread in the image

346 — Determine offset between the center of the drum and a center of the tread

349 — Send offset as an error signal to the tread positioning system

End

**FIG. 7**

FIG. 8

FIG. 9

343a

Start

373 — Identify profile trace of the green rubber tread in the image

376 — Identify location of die line peak in the profile trace

379 — Identify center of the green rubber tread in the profile trace based on position of die line peak

383 — Store tread center value identified in the current profile trace

386 — Last profile trace ?

N → Identify next profile trace from the green rubber tread in the image

389

Y

393 — Determine center of the green rubber tread as an average of the respective tread center values identified in the corresponding profile traces

Return

# FIG. 10

FIG. 11

343b

Start

423 — Identify first profile trace in the image

426 — Perform convolution between the current profile trace and a predefined tread profile

429 — Identify tread center value for the current profile trace based on position of the convolution maximum

433 — Store tread center value identified in the current profile trace

436 — Last profile trace ?

N — Identify next profile trace in the image for consideration

439

Y

443 — Determine tread center as an average of the respective tread center values identified from the corresponding profile traces

Return

# FIG. 12

FIG. 13

EP 4 360 863 B1

FIG. 14

FIG. 15

Start

513 Obtain an axial image trace across
the calibration fixture attached to
the tire building drum

**FIG. 16**

516 Map vertical positions of pixels in
columns of the photo sensor array to
actual radius values

Return

143e

Start

533 Move the tire building drum from a first
position to either position A or B

143f

536 Generate 3D image of the tire building
drum while a breaker or green rubber
tread is applied thereto

539 Identify a position of one or both edges
of the tire building drum from the 3D
image and calculate a position of the
center of the tire building drum

**FIG. 17**

543 Verify whether the edge(s) or the
center of the tire building drum is/are
within a predefined tolerance from the
calibration edge position(s)

546 Verify whether the radius of the tire
building drum is correct

Return

Imaging Controller 143

Processor(s)
553

Memory 556

Image Controller Logic 563

3D image 136

559

# FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106645198 A
- JP 2010260178 A
- DE 102006017882 A1
- US 5206720 A
- EP 3141382 A1